# EUROPEAN PATENT SPECIFICATION

(11) **EP 2 801 848 B1**
(45) Date of publication and mention of the grant of the patent: **05.07.2017**
(21) Application number: 13826833.9
(22) Date of filing: 10.05.2013
(51) Int. Cl.: G02B 6/00

(54) **OPTICAL FIBER FUSION SPLICING SYSTEM**
GLASFASER-FUSIONSSPLEISSSYSTEM
SYSTÈME D'ÉPISSAGE PAR FUSION DE FIBRE OPTIQUE

(30) Priority: 04.10.2012 JP 2012222049
(43) Date of publication of application: 12.11.2014
(73) Proprietor: Fujikura Ltd., Tokyo 135-8512 (JP)
(72) Inventor: KAWANISHI, Noriyuki, Sakura-shi Chiba 285-8550 (JP)
(74) Representative: Cabinet Plasseraud
(86) International application number: PCT/JP2013/063127
(87) International publication number: WO 2014/054307

(56) References cited:
- JP-A- 2010 039 002

## Description

### TECHNICAL FIELD

The present invention relates to an optical fiber fusion splice system.

### BACKGROUND ART

In general, the following operations are needed to perform a fusion splice of an optical fiber.
(1-1) An optical fiber core is extracted from an optical fiber cable.
(1-2) A resin coating (tip portion) which covers the extracted optical fiber core is removed by an optical fiber coating removal tool.
(1-3) Resin coating chips remaining on a surface of glass (bare optical fiber) of the optical fiber core in which the coating of the tip portion is removed are removed by cloth or paper which is wetted by alcohol.
(1-4) The cleaned optical fiber core is cut by an optical fiber cutting machine.
(1-5) The cut optical fiber core is fusion-spliced by an optical fiber fusion splicing machine.
(1-6) The fusion-spliced optical fiber core is covered with a heat-shrinkable reinforcing sleeve, and is heated and reinforced by a heater of the fusion splicing machine.
(1-7) The heated and reinforced optical fiber core is stored in a storage tray of a connection portion storage case.

(1-2) to (1-4) are referred to as a preparation process of the optical fiber core before the fusion splice is performed.

In order to perform the preparation process, a space, in which various tools such as the coating removal tool, the cloth or the paper for cleaning, an alcohol container, and the optical fiber cutting machine (cutter) are placed and the work is performed, is needed.

In optical fiber fusion-splicing working which is performed to construct a high speed network through the optical fibers, reduction of costs according to shortening of work hours is required.

In order to shorten the work hours, previously, shortening of connection time and heating time of the fusion splicing machine was a problem.

However, in recent years, establishment of main artery ends, and work at branch lines or residential areas has increased.

In the fusion splice at the branch lines or residential areas, the number of connected optical fibers for each location is small, and the work place is frequently changed (moved).

In the above-described circumstances, shortening of the time necessary to construct a work environment to work at one work place or to removing the fusion splicing machine or the like from the work place is more important than shortening of the fusion splice time and the heating time.

In order to increase efficiency of the fusion splice working, various dedicated working tables are suggested (for example, refer to PATENT DOCUMENTS 1 to 4).

In PATENT DOCUMENT 1, a working table for an overhead optical cable closure is disclosed, which is provided on a bottom surface of a box portion having an approximately rectangular bottom surface and includes grasping means for used to separate and fix a bottom plate of a closure, and supporting means which is provided in the box portion and has a length adjustment means used to hand the box portion from a supporting wire of the closure.

In PATENT DOCUMENT 2, a connection working table of an overhead optical cable is disclosed which is hung on a linear wire such as a tensile strength wire by hook portions provided in a plurality of arm members which extend to be approximately perpendicular to a working table surface, and can adjust the height of a working surface.

In PATENT DOCUMENT 3, a working table for optical fiber connection work is disclosed, which is formed of hooks which are engaged with an upper edge of a riding bucket of a bucket car for high-location work, a pressing portion which extends downward from the hooks and contacts a wall surface of the riding bucket, and a table portion which is provided to horizontally extend in the middle of the pressing portion.

In PATENT DOCUMENT 4, a working table for mounting a fusion splicing machine is disclosed in which a work belt is mounted on both ends of a base material, a fixture is mounted on the base material via a hinge which can stop rotation at an arbitrary angle, and a fusion splicing machine storing portion capable of rotating and fixing the fusion splicing machine with respect to the base material in a state where the fusion splicing machine is mounted is formed between the base material and the fixture.

As described above, the connection number of the optical fibers at one site of the connection work is lower, and it is necessary to change the place where the connection work is performed many times in one day.

In most cases, a vehicle is used to move between work sites.

However, like Fiber To The Home (FTTH) construction, in a branch line construction in a place close to a residential area, that is, in a connection work in the vicinity of apartments or houses, workers cannot approach the connection work site by a vehicle.

Moreover, also in general main artery construction, due to the fact that there is no parking space, or the like, in most cases, the parking space of the vehicle and the work site are not close to each other.

In general, a fusion splicing machine, which fusion-splices the telecommunication optical fibers having a diameter of 0.125 mm, is a precision machine.

In addition, a related tool such as an optical fiber cutter is also precisely adjusted.

Accordingly, it is necessary to minimize impact and vibration with respect to the machines and tools.

Therefore, when the fusion splicing machine is transported, it is preferable that the fusion splicing machine be stored in a transport box having an impact absorbing function.

When the fusion splicing machine is moved in a vehicle and is moved from the vehicle to the connection work site, the fusion splicing machine is transported in a state where it is stored in the transport box.

Moreover, the transport box is opened at the connection work site, and the work starts after the fusion splicing machine is installed on a working table which is separately transported.

After the construction is completed, the fusion splicing machine is removed. Thereafter, the working table is stored in the transport box and is transported to the vehicle.

In general, in a work procedure in which the working table and the transport box are transported, the following operation is needed.
(2-1) Before the connection work is performed, the fusion splicing machine and the tools are extracted from the transport box.
(2-2) Before the connection work is performed, the fusion splicing machine and the tools are installed on the working table.
(2-3) After the connection work is performed, the fusion splicing machine and the tools are removed from the working table.
(2-4) After the fusion splice working is performed, the fusion splicing machine and the tools are stored in the transport box.

In order to eliminate the operations of (2-1) to (2-4), in PATENT DOCUMENT 5, a work box is suggested which is formed of a main body portion which stores a fusion splicing machine and related tools and a cover portion which can be opened and closed with respect to the main body portion, and in which a planar portion for performing the connection work at the front side of the main body portion is formed in a state where the cover portion is opened with respect to the main body portion.

According to the suggestion, it is not necessary to install the fusion splicing machine and the tools on the working table or remove them from the working table.

However, since there is no impact absorbing function in the work box of PATENT DOCUMENT 5, the work box is not suitable when it is transported over a long distance.

Moreover, the work box cannot be protected from rain or dust.

PATENT DOCUMENT 6 suggests that a working table be mounted on a transport box having an impact absorbing function.

According to the suggestion, it is possible to simultaneously transport the working table and the transport box.

However, after the transport box is transported to the connection work site, it is necessary to remove the working table fixed by screws or the like from the upper surface of the transport box, open the transport box, extract the fusion splicing machine and various tools, and dispose the extracted articles on the working table.

Moreover, after the connection work ends, the reverse operation needs to be performed. That is, it is necessary to remove the fusion splicing machine and various tools from the working table, store them in the transport box, and finally mount the working table on the transport box.

Accordingly, in the transport box of PATENT DOCUMENT 6, the task for eliminating the operations of (2-1) to (2-4) is not achieved.

In PATENT DOCUMENT 7, an accommodation case for a fusion splicing machine is disclosed in which a cover portion is provided to be opened and closed on the upper portion of a box portion, a body belt is mounted on ends of an operator side which is a pair of side surface portions of a box portion, a suspension belt in which the length can be adjusted is mounted on each of the pair of side surface portions of the box portion, the box portion and the cover portion are formed of a flexible material, and a plate-like body defining the plane is disposed on the bottom surface portion of the box portion.

However, the working table is not provided in the accommodation case.

In PATENT DOCUMENT 8, a tool box is disclosed in which a tool storage box can be disposed on a storage tray and the storage tray can be engaged on a tool box main body.

In PATENT DOCUMENT 9, a tool box is disclosed in which a storage tray having an elliptical box main body and upper cover, a handle mounted on the upper cover, and a notched slot groove on the box main body is provided.

In the tool boxes, a tool storage amount is increased by dividing the space in the box, and the storage place can be stabilized.

In addition, since the fusion splicing machine is not stored, there is no impact absorbing function.

Moreover, the storage tray directly contacts a hard box main body.

### PRIOR ART DOCUMENTS

### PATENT DOCUMENTS

[PATENT DOCUMENT 1] Japanese Unexamined Patent Application, First Publication No. H10-206652
[PATENT DOCUMENT 2] Japanese Unexamined Patent Application, First Publication No. H10-282356
[PATENT DOCUMENT 3] Japanese Unexamined Patent Application, First Publication No. H11-005695
[PATENT DOCUMENT 4] Japanese Unexamined Patent Application, First Publication No. 2007-193097
[PATENT DOCUMENT 5] Japanese Unexamined Patent Application, First Publication No. 2006-201305
[PATENT DOCUMENT 6] Japanese Unexamined Patent Application, First Publication No. 2010-039002
[PATENT DOCUMENT 7] Japanese Unexamined Patent Application, First Publication No. 2011-145528
[PATENT DOCUMENT 8] United States Patent No. 5680932
[PATENT DOCUMENT 9] United States Patent Application, Publication No. 2005/0056561

### DISCLOSURE OF INVENTION

### PROBLEMS TO BE SOLVED BY INVENTION

The present invention is made in consideration of the above-described problems, and an object thereof is to provide an optical fiber fusion splice system which can eliminate the operation of extracting a fusion splicing machine from a storage box and installing the machine on a working table, and removing the fusion splicing machine from the working table and storing the machine in the storage box, and can secure an impact absorbing function with respect to the fusion splicing machine and tools.

### MEANS FOR SOLVING THE PROBLEMS

In order to achieve the object, according to the present invention as defined by claim 1 there is provided an optical fiber fusion splice system including a working table and a storage box which stores the working table, wherein the working table includes a fusion splicing machine installation portion accommodating a fusion splicing machine to be stored in the storage box and a working surface on which preparation work for an optical fiber is configured to be performed, the fusion splicing machine installation portion includes a fusion splicing machine restriction portion being configured to restrict the fusion splicing machine without the fusion splicing machine moving in a horizontal direction with respect to the working table, the working surface includes a protrusion provided on an outer circumference of the working surface, the protrusion being configured to prevent a tool used in the preparation work from falling from the working surface, the storage box includes a box main body and a cover which covers an upper portion of the box main body, the box main body has a two-layer structure which is configured of a box main body outer layer formed of a rigid thermoplastic resin and a box main body inner layer of which at least a portion is formed of a synthetic resin foam body, the box main body outer layer includes a bottom portion and a side wall portion which is erected around the bottom portion, the box main body inner layer includes a working table fitting portion capable of being fitted to the working table so that the box main body outer layer and the working table have no contact each other, the working table fitting portion includes protrusions contacting the working table and recessed portions having no contact with the working table, the cover has a two-layer structure which is configured of a cover outer layer formed of a rigid thermoplastic resin, and a cover inner layer formed of a synthetic resin foam body, and the cover outer layer has no contact with the working table. The synthetic resin foam body forming the box main body inner layer and the cover inner layer, may be foamed polystyrene.

The protrusions may be provided in three or more places around the working table or in two places which are opposite to each other around the working table and are arranged between the working table and the side wall portion of the box main body outer layer.

The optical fiber fusion splice system according to the aspect of the present invention may further include the fusion splicing machine, the fusion splicing machine may include an indicator which is movable from a side surface of the fusion splicing machine toward the outside, and the box main body may be formed so as not to contact the indicator when the indicator moves and further comprises a notch portion notched from an upper end of the box main body toward a lower end.

The cover may further include a protrusion portion capable of being fitted to the notch portion.

The optical fiber fusion splice system according to the aspect of the present invention may further include the fusion splicing machine, and the fusion splicing machine may include an indicator fixed onto an upper surface of the fusion splicing machine.

The working table may further include a fixation hole into which an optical fiber transportation jig is configured to be inserted, the optical fiber transportation jig being used after fusion splice.

The storage box may further include a first accessory storage portion storing an article on the working surface, and a second accessory storage portion storing an article below the fusion splicing machine installation portion or below the working surface.

The cover may further include a partition provided between the first accessory storage portion and the fusion splicing machine.

The working table may further include a partition wall provided between the second accessory storage portion and the fusion splicing machine.

The bottom portion of the box main body and the cover may have a waterproof property to prevent water from infiltrating into an inner portion of the storage box.

### EFFECTS OF THE INVENTION

According to the aspect of the present invention, it is possible to eliminate operation of extracting the fusion splicing machine from the storage box and installing the machine on the working table, and removing the fusion splicing machine from the working table and storing the machine in the storage box, and it is possible to secure an impact absorbing function with respect to the fusion splicing machine and a tool.

### BRIEF DESCRIPTION OF THE DRAWINGS

FIG. 1 is an outline view of an optical fiber fusion splice system according to a first embodiment of the present invention.
FIG. 2 is a cross-sectional view of the optical fiber fusion splice system according to the first embodiment of the present invention.
FIG. 3 is a perspective view of a fusion splicing machine and a working table according to the first embodiment of the present invention.
FIG. 4 is an exploded perspective view in which an inner layer and an outer layer of a box main body according to the first embodiment of the present invention are separated from each other.
FIG. 5 is a perspective view of the box main body according to the first embodiment of the present invention.
FIG. 6 is a top view of the box main body which stores the fusion splicing machine and the working table according to the first embodiment of the present invention.
FIG. 7 is a perspective view of the box main body which stores the fusion splicing machine and the working table according to the first embodiment of the present invention.
FIG. 8 is an exploded perspective view in which an inner layer and an outer layer of a cover according to the first embodiment of the present invention are separated from each other.
FIG. 9 is a perspective view of the cover according to the first embodiment of the present invention.
FIG. 10 is an outline view of an optical fiber fusion splice system according to a second embodiment of the present invention.
FIG. 11 is a cross-sectional view of the optical fiber fusion splice system according to the second embodiment of the present invention.
FIG. 12 is a perspective view of a fusion splicing machine and a working table according to the second embodiment of the present invention.
FIG. 13 is an exploded perspective view in which an inner layer and an outer layer of a box main body according to the second embodiment of the present invention are separated from each other.
FIG. 14 is a perspective view of a box main body according to the second embodiment of the present invention.
FIG. 15 is a top view of the box main body which stores the fusion splicing machine and the working table according to the second embodiment of the present invention.
FIG. 16 is a perspective view of the box main body which stores the fusion splicing machine and the working table according to the second embodiment of the present invention.
FIG. 17 is an exploded perspective view in which an inner layer and an outer layer of a cover according to the second embodiment of the present invention are separated from each other.
FIG. 18 is a perspective view of the cover according to the second embodiment of the present invention.
FIG. 19 is an exploded perspective view of the fusion splicing machine and the working table according to the second embodiment of the present invention.
FIG. 20A is a perspective view of the working table according to the second embodiment of the present invention.
FIG. 20B is an exploded perspective view of the working table according to the second embodiment of the present invention.
FIG. 21 is a perspective view in a state where the fusion splicing machine according to the second embodiment of the present invention is mounted on the working table.
FIG. 22 is an outline view of an optical fiber fusion splice system according to a third embodiment of the present invention.
FIG. 23 is a perspective view in which a cover of the optical fiber fusion splice system according to the third embodiment of the present invention is opened.
FIG. 24 is a perspective view in a state where the cover according to the third embodiment of the present invention is removed.
FIG. 25 is a top view in the state where the cover according to the third embodiment of the present invention is removed.
FIG. 26 is a cross-sectional view of the optical fiber fusion splice system according to the third embodiment of the present invention.
FIG. 27 is an exploded perspective view in which an inner layer and an outer layer of a box main body according to the third embodiment of the present invention are separated from each other.
FIG. 28 is a perspective view of the box main body according to the third embodiment of the present invention.
FIG. 29 is a top perspective view in which an inner layer and an outer layer of a cover according to the third embodiment of the present invention are separated from each other.
FIG. 30 is a top perspective view of the cover according to the third embodiment of the present invention.
FIG. 31 is an exploded perspective view in which the inner layer and the outer layer of the cover according to the third embodiment of the present invention are separated from each other.
FIG. 32 is a perspective view of the cover according to the third embodiment of the present invention.
FIG. 33 is a perspective view of a fusion splicing machine and a working table according to the third embodiment of the present invention.
FIG. 34 is a perspective view in a state where the fusion splicing machine according to the third embodiment of the present invention is mounted on the working table.
FIG. 35 is an outline view of an optical fiber fusion splice system according to a fourth embodiment of the present invention.
FIG. 36 is a perspective view in which a cover of the optical fiber fusion splice system according to the fourth embodiment of the present invention is opened.
FIG. 37 is a perspective view in a state where the cover according to the fourth embodiment of the present invention is removed.
FIG. 38 is a top view in the state where the cover according to the fourth embodiment of the present invention is removed.
FIG. 39 is a cross-sectional view of the optical fiber fusion splice system according to the fourth embodiment of the present invention.
FIG. 40 is an exploded perspective view in which an inner layer and an outer layer of a box main body according to the fourth embodiment of the present invention are separated from each other.
FIG. 41 is a perspective view of the box main body according to the fourth embodiment of the present invention.
FIG. 42 is a top perspective view in which an inner layer and an outer layer of a cover according to the fourth embodiment of the present invention are separated from each other.
FIG. 43 is a top perspective view of the cover according to the fourth embodiment of the present invention.
FIG. 44 is an exploded perspective view in which the inner layer and the outer layer of the cover according to the fourth embodiment of the present invention are separated from each other.
FIG. 45 is a perspective view of the cover according to the fourth embodiment of the present invention.
FIG. 46 is a perspective view of a fusion splicing machine and a working table according to the fourth embodiment of the present invention.
FIG. 47 is a perspective view in a state where the fusion splicing machine according to the fourth embodiment of the present invention is mounted on the working table.
FIG. 48 is a perspective view of the working table according to the fourth embodiment of the present invention.
FIG. 49 is an exploded perspective view of the working table according to the fourth embodiment of the present invention.
FIG. 50 is an enlarged perspective view of a fusion splicing machine installation portion according to the fourth embodiment of the present invention.
FIG. 51 is an enlarged perspective view of the fusion splicing machine according to the fourth embodiment of the present invention.
FIG. 52 is a perspective view in a state where the fusion splicing machine according to the fourth embodiment of the present invention is mounted on the fusion splicing machine installation portion.
FIG. 53A is a perspective view of a front side of a pressing plate according to the fourth embodiment of the present invention.
FIG. 53B is a perspective view of a rear side of the pressing plate according to the fourth embodiment of the present invention.

### EMBODIMENTS FOR CARRYING OUT THE INVENTION

Hereinafter, the present invention will be described with reference to the drawings based on preferred embodiments.

### <First Embodiment>

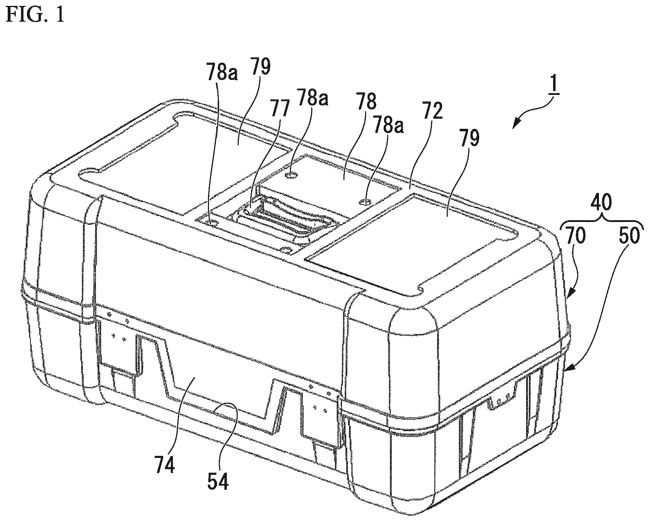

FIGS. 1 to 9 show an optical fiber fusion splice system according to a first embodiment of the present invention.

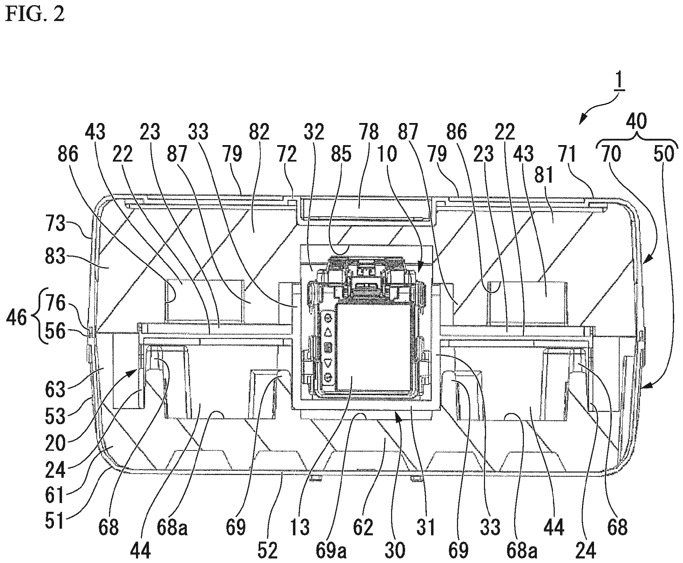

As shown in FIGS. 1 and 2, an optical fiber fusion splice system 1 is configured to store a fusion splicing machine 10 and a working table 20 in a storage box 40.

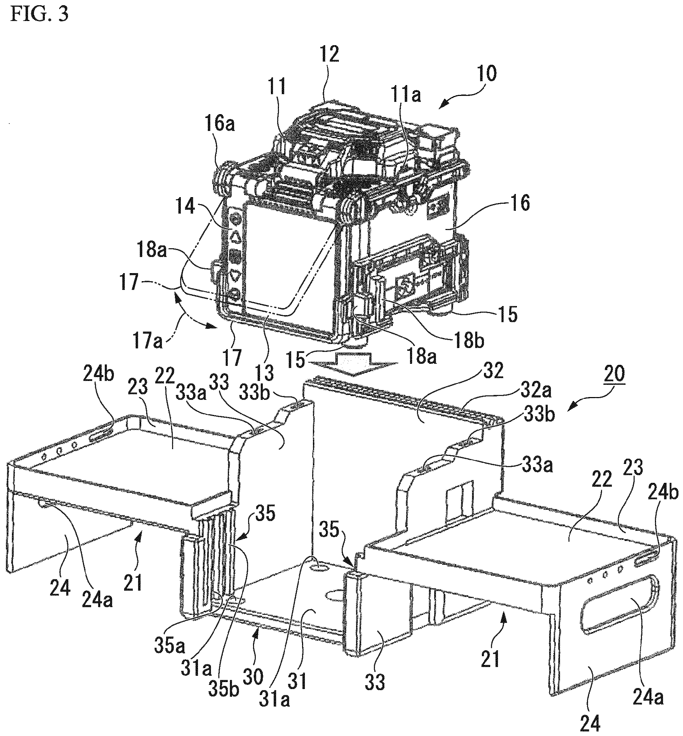

As shown in FIG. 3, the working table 20 includes a fusion splicing machine installation portion 30 which accommodates the fusion splicing machine 10 and a working surface 22 on which preparation work for an optical fiber is performed.

Here, with respect to a front side, a rear side, a left side, and a right side, in side surfaces of the fusion splicing machine 10, the side in which an indicator 13 is provided is referred to as the front side, the rear side (side opposite to the side in which the indicator 13 is provided) of the fusion splicing machine 10 when viewed from an operator is referred to as the rear side (inner side), and the left and right when viewed from the operator are referred to as the left side and the right side.

The fusion splicing machine 10 includes at least a fusion splicing portion 11 to perform fusion splice of the optical fiber.

The fusion splicing machine 10 according to the present embodiment includes a reinforcing sleeve heating portion 12 which heats a reinforcing sleeve coated on the optical fiber after the fusion splice, the indicator 13 which displays various information or the like from the fusion splicing machine 10 toward the operator, an operating portion 14 which is used for condition setting or the like, and the like in addition to the fusion splicing portion 11.

In addition, in the fusion splicing machine 10, the fusion splicing portion 11, the reinforcing sleeve heating portion 12, and built-in devices (not shown) such as a driving portion and a control portion of fusion splice and heating are disposed in an approximately rectangular parallelepiped main body portion 16.

A plurality of (for example, four) legs 15 are provided on a lower portion of the main body portion 16.

Various display methods such as a liquid crystal, an organic EL, or an electric light type can be adopted by the indicator 13.

Moreover, the fusion splicing machine 10 includes a panel portion 17 which can move to the front side of the main body portion 16, and the indicator 13 and the operating portion 14 are disposed on the panel portion 17.

The panel portion 17 is connected to the main body portion 16 via a horizontal rotary shaft 16a which is provided on the upper portion of the main body portion 16.

The panel portion 17 is moved as shown by an arrow 17a and can face the indicator 13 in an arbitrary direction within a predetermined angle range.

The operator can move the panel portion 17 in a direction in which the indicator 13 is easily viewed.

The fusion splicing machine 10 is accommodated in the fusion splicing machine installation portion 30 (refer to FIG. 2).

The fusion splicing machine installation portion 30 includes a bottom portion 31 which supports the fusion splicing machine 10, a back portion 32 which is provided at the rear side of the fusion splicing machine 10, and a pair of side portions 33 which are provided in both of the left and right sides of the bottom portion 31 and the back portion 32.

The bottom portion 31 has an approximately rectangular shape, and among four sides of the bottom portion 31, three sides are surrounded by the back portion 32 and the side portions 33, and the front portion is opened.

The fusion splicing machine installation portion 30 includes a fusion splicing machine restriction portion 35 which restricts the fusion splicing machine 10 so that the fusion splicing machine 10 does not move in a horizontal direction with respect to the fusion splicing machine installation portion 30 (that is, with respect to the working table 20).

Here, the fusion splicing machine restriction portions 35, which include one or two or more guide grooves 35a and 35b which extend in a perpendicular (vertical, up-down) direction, are formed in the front sides of the side portions 33 and 33 of both of the left and right sides.

The guide grooves 35a and 35b can receive (store) vertical protrusions 18a and 18b which are formed on side surfaces of the fusion splicing machine 10.

By moving the fusion splicing machine 10 in the up-down direction with respect to the bottom portion 31 of the fusion splicing machine installation portion 30 while guiding the protrusions 18a and 18b to the guide grooves 35a and 35b, the fusion splicing machine 10 can be mounted on or be moved from the fusion splicing machine installation portion 30.

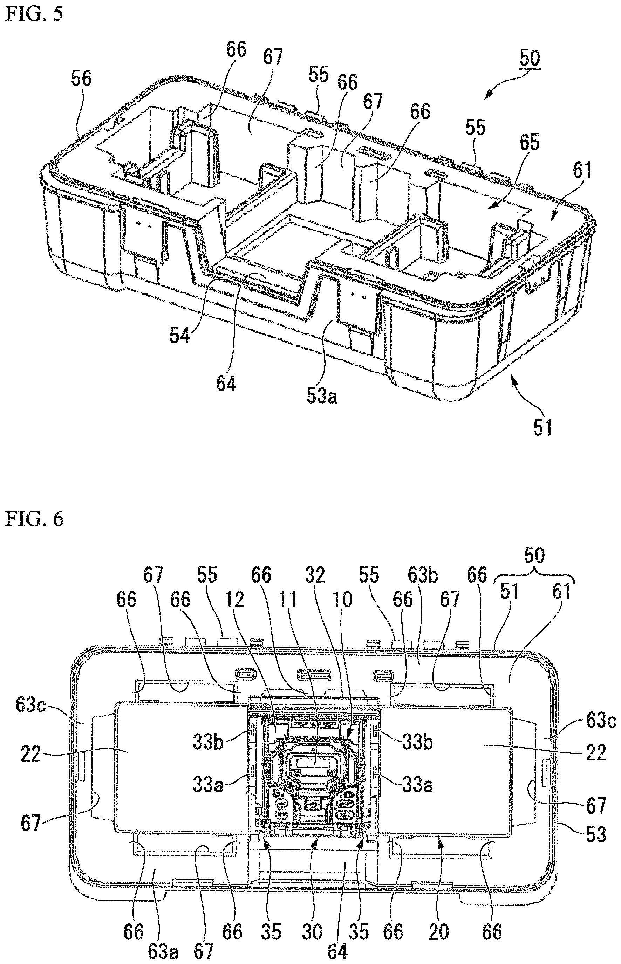

Moreover, although only a portion is shown in FIG. 3, the protrusions 18a and 18b and the guide grooves 35a and 35b are provided in both of the left and right sides of the fusion splicing machine 10 and the fusion splicing machine installation portion 30 respectively (refer to the fusion splicing machine restriction portions 35 of FIG. 6).

When the fusion splicing machine 10 is installed in the fusion splicing machine installation portion 30, concave receiving seats 31a which receive the legs 15 of the fusion splicing machine 10 are formed on the bottom portion 31 (here, in four comers) of the fusion splicing machine installation portion 30.

Moreover, the fusion splicing machine 10 includes a screw hole (not shown) on the bottom portion of the main body portion 16.

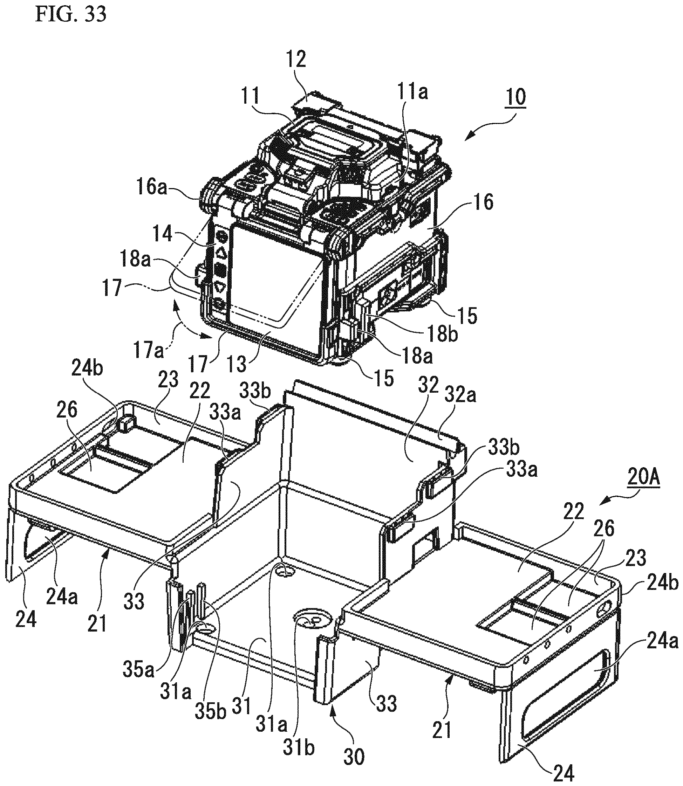

The fusion splicing machine 10 can be screwed in a state where the bottom portion 31 of the fusion splicing machine installation portion 30 is interposed between the bottom portion of the fusion splicing machine 10 and the head of a screw using the screw and a hole 31b (refer to FIG. 33) of the bottom portion 31 of the fusion splicing machine installation portion 30.

However, since a force in the down direction always acts due to own weight of the fusion splicing machine 10, the fixation using the screw or the like is not necessarily needed.

The working table 20 includes working surfaces 22 which are close to the left and right sides of the fusion splicing machine 10.

Preparation work for the optical fiber can be performed on the working surfaces 22 and 22.

A falling prevention protrusion 23 which prevents various articles (not shown) such as tools used in the preparation work from falling from the working surface 22 is provided in the outer circumference of the working surface 22.

In the above-described example, working portions 21 including the working surfaces 22 and the falling prevention protrusions 23 are disposed in both of the left and right sides of the fusion splicing machine installation portion 30.

The falling prevention protrusions 23 in the shown example are wall portions which are provided in three sides of the working surface 22 excluding the side in which the side portion 33 is positioned and are integrated with the side portion 33.

As the preparation work for the optical fiber before the fusion splice, there are coating removal, cleaning, cutting, or the like as described in (1-2) to (1-4).

As the articles which are used in the preparation work, there are an optical fiber coating removal tool (stripper) which removes a resin coating covering an optical fiber core, an alcohol container with alcohol and a wiping material (cloth, paper, or the like) which clean dust such as resin coating chips attached to the optical fiber core, an optical fiber cutting machine (cutter) which cuts the optical fiber core, or the like.

The dimensions of the working surface 22 may be appropriately set by taking a balance between an area (easy work) required in work and dimensions (easy transport) of the storage box, and although the dimensions are not particularly limited, the working surface may be set to have a rectangular shape in which one side is 10 to 30 cm, for example, a square shape in which all sides are 20 cm respectively, or the like.

One side of the working portion 21 is integrated with the side portion 33 of the fusion splicing machine installation portion 30, and the opposite side is supported by a vertical wall 24.

In both ends (the vertical walls 24 and positions near the vertical walls 24) of the working table 20, handle holes 24a which are used when the working table 20 is gripped by hands, and belt holes 24b through which a shoulder hanging belt, strap, or the like (not shown) can pass through when the working table 20 is hung on the shoulder are provided.

The handle holes and the belt holes are effective when the working table 20 is extracted from the storage box 40 or when the operator performs the fusion splice working using the working table 20 extracted from the storage box 40 in a state where the operator stands.

Moreover, in order to improve workability of a treatment (treatment of (1-6) described above) in which the reinforcing sleeve is covered on the optical fiber after the fusion splice, the working table 20 further includes the constituents discussed below.

The working table 20 includes fixation holes 33a and 33b to which an optical fiber transportation jig (not shown) is inserted, in both of the left and right sides (upper ends of the side portions 33) of the fusion splicing machine installation portion 30.

The fixation holes 33a provided in the front side are disposed in both of the left and right sides of the fusion splicing portion 11 of the fusion splicing machine 10, and the fixation holes 33b provided in the inner side are disposed in both of the left and right sides of the reinforcing sleeve heating portion 12 which is built in the fusion splicing machine 10 (also refer to FIG. 6).

When the fusion splice working is performed, the optical fiber transportation jig is fixed to the fixation holes 33a provided in the front side in advance, and the optical fiber is mounted on the optical fiber transportation jig by gripping or the like after the fusion splice.

If the optical fiber transportation jig is held and removed from the front fixation holes 33a and is moved to the inner fixation holes 33b, an unreinforced optical fiber after the fusion splice can be easily moved (transported) to the reinforcing sleeve heating portion 12.

Accordingly, damage in a connection point in which tips of the optical fibers are connected can be securely prevented.

In this case, the optical fiber transportation jig is used when the optical fiber after the fusion splice is transported from the fusion splicing portion 11 of the fusion splicing machine 10 to the reinforcing sleeve heating portion 12.

Moreover, the working table 20 includes an optical fiber installation stand 32a on which the optical fiber reinforced by the reinforcing sleeve after the connection is installed.

For example, the optical fiber installation stand 32a in the shown example has a configuration in which a dent (groove) having a U-shaped cross-section is provided on the upper end of the back portion 32.

For example, the working table 20 may be formed of materials of one kind or two kinds or more among various materials such as a thermoplastic resin, a thermosetting resin, ceramics, metal, and wood materials.

As shown in FIG. 2, the fusion splicing machine 10 is stored in the storage box 40 in a state where the fusion splicing machine 10 is mounted on the fusion splicing machine installation portion 30 of the working table 20.

The storage box 40 includes a box main body 50 in which the working table 20 on which the fusion splicing machine 10 is mounted is stored, and a cover 70 which covers the upper portion of the box main body 50.

In order to secure an impact absorbing function for protecting the fusion splicing machine 10 or the like, the storage box 40 includes the configurations discussed below.

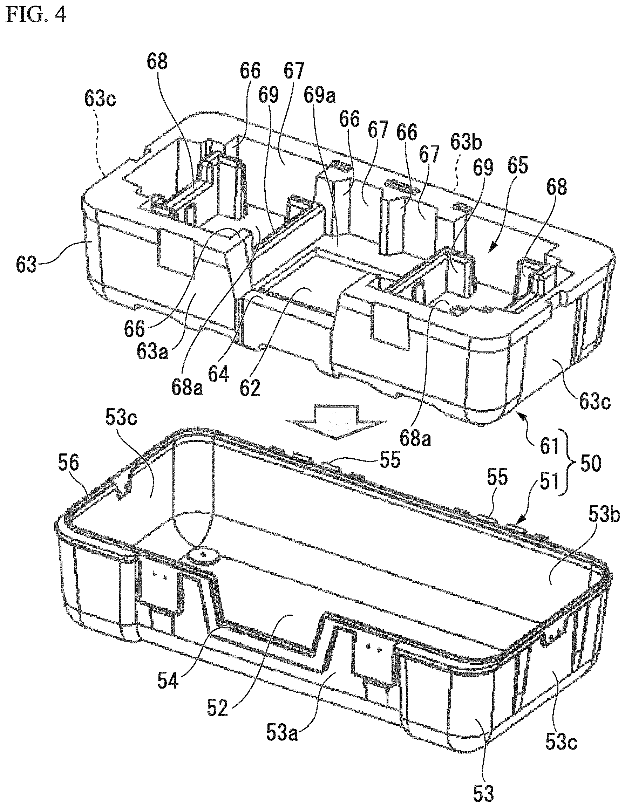

As shown in FIGS. 4 and 5, the box main body 50 has a two-layer structure which is configured of a box main body outer layer 51 formed of a rigid thermoplastic resin, and a box main body inner layer 61 formed of a synthetic resin foam body.

FIG. 4 shows a state where the box main body outer layer 51 and the box main body inner layer 61 are separated from each other and FIG. 5 shows a state where both are combined.

The box main body outer layer 51 includes a bottom portion 52 and a side wall portion 53 which is erected (is provided to be approximately perpendicular to the bottom portion 52) around the bottom portion 52.

The bottom portion 52 has an approximately rectangular shape, and the side wall portions 53 include a front wall 53a corresponding to the front side of the fusion splicing machine 10, a rear wall 53b opposite to the front wall 53a, and a pair of end walls 53c which are provided between both ends of the front wall 53a and the rear wall 53b.

Similarly, the box main body inner layer 61 includes a bottom portion 62 and a side wall portion 63 which is erected (is provided to be approximately perpendicular to the bottom portion 62) around the bottom portion 62.

The bottom portion 62 has an approximately rectangular shape, and the side wall portions 63 include a front wall 63a, a rear wall 63b opposite to the front wall 63a, and a pair of end walls 63c which are provided between both ends of the front wall 63a and the rear wall 63b.

The box main body outer layer 51 and the box main body inner layer 61 are fitted to each other so that the bottom portion 52 contacts the bottom portion 62, the front wall 53a contacts the front wall 63a, the rear wall 53b contacts the rear wall 63b, and the end wall 53c contacts the end wall 63c.

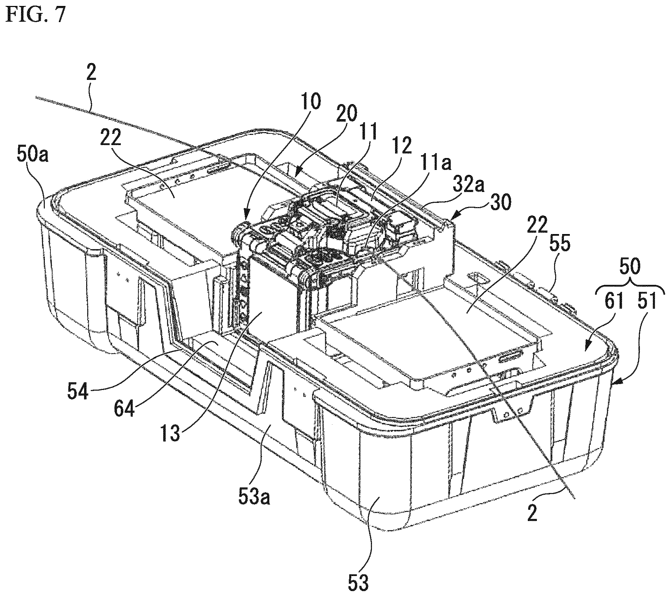

As shown in FIGS. 6 and 7, the box main body 50 can store the working table 20 on which the fusion splicing machine 10 is mounted.

The box main body inner layer 61 formed of a synthetic resin foam body surrounds a periphery of the working table 20.

The box main body inner layer 61 includes a working table fitting portion 65 having a shape which is fitted to the working table 20 so that the box main body outer layer 51 does not contact the working table 20 (refer to FIGS. 4 and 5).

By arranging the box main body inner layer 61 configured of a synthetic resin foam body between the box main body outer layer 51 and the working table 20, impact which is transmitted from outside the box to the working table 20 can be damped.

In addition, in the box main body inner layer 61, all portions of the inner layer 61 do not need to be formed of the synthetic resin foam body, and at least a portion of the inner layer 61 may be formed of the synthetic resin foam body.

Moreover, it is preferable that at least the working table fitting portion 65 be formed of the synthetic resin foam body.

In addition, the box main body inner layer 61 has a shape which is shrunk by impact between the box main body inner layer 61 and the working table 20.

Specifically, in the working table fitting portion 65, the box main body inner layer 61 includes protrusions 66 in which the synthetic resin foam body configuring the box main body inner layer 61 contacts the working table 20, and recessed portions 67 in which the synthetic resin foam body does not contact the working table 20.

In the example shown in FIG. 6, the protrusions 66 are formed at two places in the front wall 63a, at three places in the rear wall 63b, and at four places in the comers between the front wall 63a or the rear wall 63b and the end wall 63 c, and the recessed portions 67 are formed between respective protrusions 66.

The protrusions 66 are arranged between the working table 20 and the side wall portion 53 of the box main body outer layer 51 and are shrunk even when impact such as rolling occurs, and thus, prevent the working table 20 and the box main body outer layer 51 from contacting each other.

As shown in FIGS. 5 and 6, it is preferable that the working table fitting portion 65 have three or more protrusions 66 around the working table 20.

Moreover, it is preferable that the working table fitting portion 65 have the protrusions 66 which are provided in two places opposite to each other around the working table 20 according to the protruded lengths of the protrusions 66 along the periphery of the working table fitting portion 65.

If the protrusions 66 and the recessed portions 67 are alternately provided, compared to a case where the synthetic resin foam body of the box main body inner layer 61 contacts the working table 20 over the entire circumference of the box main body inner layer 61, shrink characteristics of the protrusions 66 are improved, and thus, become preferable.

Moreover, similar to the protrusions 66 and the recessed portions 67 in the side surfaces (the side wall portion 63 of the box main body inner layer 61) of the working table fitting portion 65, also in the bottom portion 62 side of the box main body inner layer 61, protrusions in which the synthetic resin foam body configuring the box main body inner layer 61 contacts the working table 20, and recessed portions in which the synthetic resin foam body does not contact the working table 20 are provided.

Specifically, as shown in FIGS. 2 and 4, abutment portions 69 which contact the side portions 33 of the fusion splicing machine installation portion 30 and abutment portions 68 which contact the vertical walls 24 are provided in the box main body inner layer 61.

Article storage recessed portions 68a, which can store articles or the like between the working surfaces 22 of the working table 20 and the box main body inner layer 61, are formed between the abutment portions 69 contacting the side portions 33 and the abutment portions 68 contacting the vertical walls 24.

Moreover, a fusion splicing machine accommodation recessed portion 69a, which can accommodate the fusion splicing machine installation portion 30, is formed between the pair of abutment portions 69 and 69 contacting the side portions 33 and 33.

In the storage box 40, in a state where the cover 70 (refer to FIG. 2) is opened (the cover 70 may be removed or may not be removed from the box main body 50), as shown in FIG. 7, the fusion splicing working can be performed using the fusion splicing machine 10 and the working table 20 in a state where the working table 20 on which the fusion splicing machine 10 is mounted is stored in the box main body 50.

Since the fusion splicing portion 11 and the reinforcing sleeve heating portion 12 of the fusion splicing machine 10 are positioned above the working table 20, the fusion splicing machine 10 can be easily operated in a state where the fusion splicing machine 10 is stored in the box main body 50 or the working table 20.

Particularly, in the fusion splicing portion 11, end surfaces of left and right optical fibers 2 approach each other from a state where the end surfaces are separated from each other, butt against each other, and are heated and fused.

Accordingly, in order to prevent inhibition of a forward movement in which the optical fibers 2 approach each other, it is preferable that the shapes of the box main body 50 (box main body outer layer 51 and box main body inner layer 61) and the working table 20 be positioned below a horizontal plane which is positioned at heights of fiber outlet portions 11a of the respective left and right sides of the fusion splicing portion 11.

However, in the portion through which the optical fiber 2 does not pass, the box main body 50 or the working table 20 may be partially disposed to be above the heights of the fiber outlet portions 11a and 11a.

As described above, the fusion splicing machine 10 shown in FIG. 3 includes the indicator 13 which can move from the side surface to the outside.

Accordingly, as shown in FIG. 7, even in a state where the fusion splicing machine 10 and the working table 20 are stored in the box main body 50, in order to prevent hindrance of the movement (so that the box main body 50 does not contact the indicator when the indicator moves) of the indicator 13 (specifically, the panel portion 17 in FIG. 3), notch portions 54 and 64, which are disposed (notched) from the upper end 50a of the box main body 50 toward the lower side, are formed in the box main body 50.

The notch portions 54 and 64 are provided in each (specifically, front walls 53a and 63a) of the box main body outer layer 51 and the box main body inner layer 61 (refer to FIGS. 4 and 5).

According to the notch portions 54 and 64, even when the indicator 13 is provided on the side surface of the fusion splicing machine 10, the operator can view the indicator 13 in the state where the fusion splicing machine 10 is stored in the box main body 50.

The indicator 13 of the side surface may be a fixed device. However, if the indicator 13 is a movable device, the movement of the indicator 13 is not hindered.

Specifically, it is preferable that the shapes of the box main body 50 and the working table 20 be formed so that the display surface of the indicator 13 does not interfere with a space region which extends in a perpendicular direction to the display surface.

When there is no interference with the space region in which the display is viewed such as a case where the indicator of the fusion splicing machine is provided on the upper surface of the fusion splicing machine, the notch portions of the box main body may be omitted.

In the box main body 50, at least the bottom portion 52 has a waterproof property so that water does not infiltrate into the inner portion of the storage box 40.

Specifically, it is preferable that the thermoplastic resin configuring the box main body outer layer 51 and the synthetic resin foam body configuring the box main body inner layer 61 be a material having a waterproof property.

In addition, it is preferable that the box main body outer layer 51 and the box main body inner layer 61 be integrally formed respectively so that holes or gaps which cause water leaks are not generated.

Accordingly, even in a state where a floor surface of the work site is wet, the fusion splicing machine can be installed.

In the shown example, in order to maintain the waterproof property until a water level of the floor surface reaches the notch portions 54 and 64, the side wall portions 53 and 63 of the box main body 50 also have the above-described waterproof property.

In addition, as shown in FIGS. 1 and 2, the storage box 40 includes the cover 70 which covers the upper portion of the box main body 50.

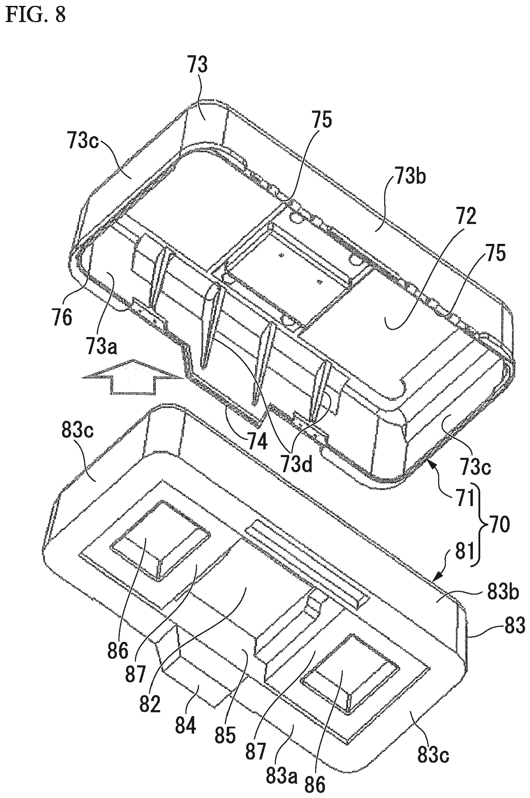

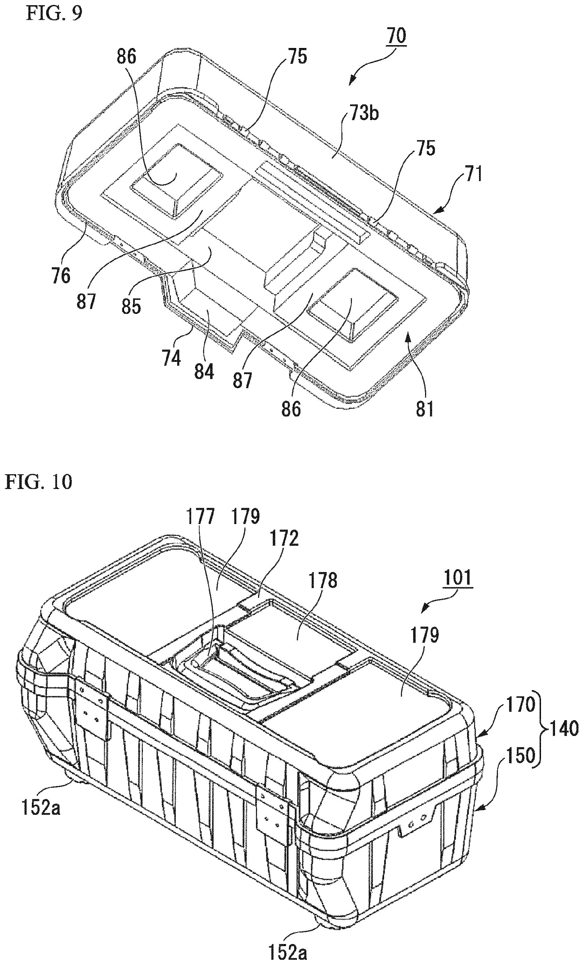

As shown in FIGS. 8 and 9, the cover 70 has a two-layer structure which is configured of a cover outer layer 71 formed of a rigid thermoplastic resin, and a cover inner layer 81 formed of a synthetic resin foam body.

FIG. 8 shows a state where the cover outer layer 71 and the cover inner layer 81 are separated from each other and FIG. 9 shows a state where both are combined.

The cover outer layer 71 includes a top portion 72, and a side wall portion 73 which is formed around the top portion 72.

The top portion 72 has an approximately rectangular shape, and the side wall portions 73 include a front wall 73a corresponding to the front side of the fusion splicing machine 10, a rear wall 73b opposite to the front wall 73a, and a pair of end walls 73c which are provided between both ends of the front wall 73a and the rear wall 73b.

Similarly, the cover inner layer 81 includes a top portion 82 and a side wall portion 83 which is formed around the top portion 82.

The top portion 82 has an approximately rectangular shape, and the side wall portions 83 include a front wall 83a, a rear wall 83b opposite to the front wall 83a, and a pair of end walls 83c which are provided between both ends of the front wall 83a and the rear wall 83b.

The cover outer layer 71 and the cover inner layer 81 are fitted to each other so that the top portion 72 contacts the top portion 82, the front wall 73a contacts the front wall 83a, the rear wall 73b contacts the rear wall 83b, and the end wall 73c contacts the end wall 83c.

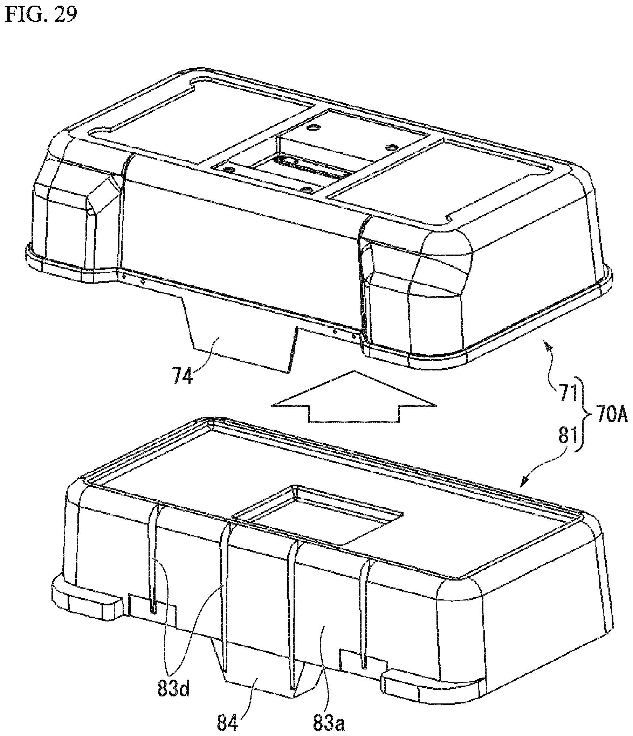

Ribs 73d, which can fit with grooves 83d (refer to FIG. 29) of the front wall 83a of the cover inner layer 81, are provided on the front wall 73a of the cover outer layer 71.

The ribs 73d and grooves 83d extend in a perpendicular (up-down) direction, and thus, can increase strength of the cover outer layer 71.

As shown in FIG. 2, the cover inner layer 81 has a configuration in which the cover outer layer 71 does not contact the working table 20.

The cover inner layer 81 configured of a synthetic resin foam body is arranged between the cover outer layer 71 and the working table 20, and thus, impact which is transmitted from the outside of the box or the cover to the working table 20 can be damped.

As shown in FIG. 1, in a state where the cover 70 is closed, blocking rain or dust is possible.

The cover 70 has a waterproof property so that water does not infiltrate into the inner portion of the storage box 40.

It is preferable that the thermoplastic resin configuring the cover outer layer 71 and the synthetic resin foam body configuring the cover inner layer 81 be a material having a waterproof property.

In addition, it is preferable that the cover outer layer 71 and the cover inner layer 81 be integrally formed respectively so that holes or gaps which cause water leaks are not generated.

A hanging strap 77 is provided in the cover 70.

If the cover 70 includes a handle such as the hanging strap 77, the transport is easily performed, which is preferable.

The cover 70 of the shown example includes a fusion splicing machine installation portion 78 on the top portion 72 and a working plane 79 in the vicinity of the fusion splicing machine installation portion 78.

Here, the working planes 79 are secured in both of the left and right sides of the fusion splicing machine installation portion 78 respectively.

If the fusion splicing machine installation portion 78 and the working plane 79 are provided in the outside of the cover 70, the fusion splicing machine 10 is extracted from the storage box 40, and the working can be also performed in a state where the fusion splicing machine 10 is installed on the fusion splicing machine installation portion 78.

However, if working is sufficiently performed using the working table 20 stored in the storage box 40, the fusion splicing machine installation portion 78 and the working plane 79 of the cover 70 are not particularly required.

When the fusion splicing machine 10 is installed in the fusion splicing machine installation portion 78, concave receiving seats 78a which receive the legs 15 (refer to FIG. 3) of the fusion splicing machine 10 are formed in the fusion splicing machine installation portion 78 (here, in four corners).

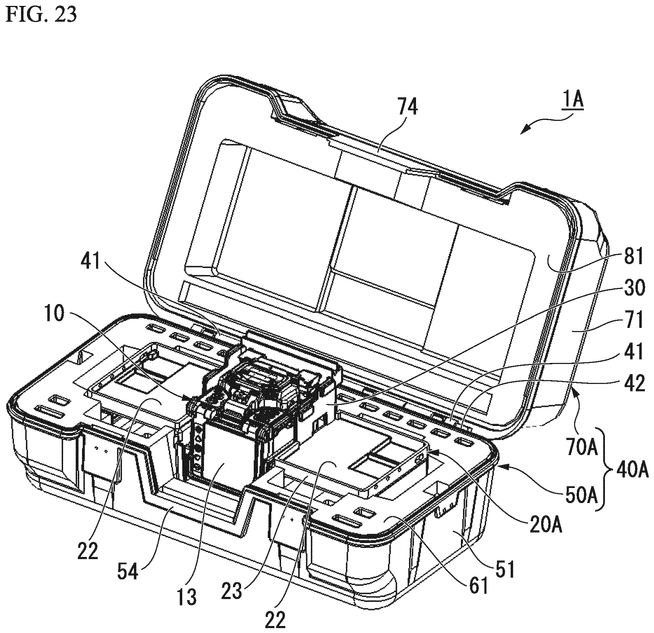

In the case of the present embodiment, the box main body 50 and the cover 70 are connected to each other by rotary hinges 41 (refer to FIG. 23) which are configured so hinge bearings 55 (refer to FIGS. 4 and 5) formed in the rear wall 53b of the box main body 50 and hinge bearings 75 (refer to FIGS. 8 and 9) formed in the rear wall 73b of the cover 70 are combined and hinge shafts 42 pass through the hinge bearings 55 and 75.

When using the fusion splicing machine 10 or the working table 20 with open the cover 70, as shown in FIG. 7, a structure in which the cover is removed may be adopted.

Moreover, a structure in which the rotary hinges capable of rotating 180° or more, and the like are used and the cover is retracted to an unobstructed position when the splicing work is performed may be adopted.

A fitting portion 46 (refer to FIG. 2) is provided between the upper end of the box main body 50 and the lower end of the cover 70, and the fitting portion 46 is formed by combining a protrusion 56 (refer to FIGS. 4 and 5) formed on the upper end of the box main body 50 (specifically, the box main body outer layer 51) with a groove 76 (refer to FIGS. 8 and 9) formed on the lower end of the cover 70 (specifically, the cover outer layer 71).

The fitting portion 46 is provided so as to be sealed so that gaps which cause water leaks or the like are not generated.

As described above, in the present embodiment, the box main body 50 includes the notch portions 54 and 64 (refer to FIG. 5), and the cover 70 includes protrusion portions 74 and 84 (refer to FIGS. 8 and 9) which can be fitted to the notch portions 54 and 64 of the box main body 50.

The fitting portion 46 according to the fitting of the protrusion 56 and the groove 76 is also formed on edges of the notch portion 54 of the box main body outer layer 51 and the protrusion portion 74 of the cover outer layer 71.

Accordingly, as shown in FIG. 1, the cover 70 can be closed with respect to the box main body 50 without gaps, and a waterproof property of the side surface of the storage box 40 can be also secured.

As shown in FIG. 2, all sides of the working table 20 on which the fusion splicing machine 10 is mounted are surrounded by the box main body inner layer 61 and the cover inner layer 81 formed of the synthetic resin foam body, and thus, the storage box 40 in which the cover 70 is closed has an impact absorption effect.

Therefore, when a transport distance is long, when there are an ascent and a descent such a slope or a step, or the like, it is possible to prevent the impact from being transmitted to the fusion splicing machine 10, and thus, the storage box 40 can be transported to any place.

As the synthetic resin foam body which configures the box main body inner layer 61 and the cover inner layer 81, there is foamed polystyrene, foamed polyethylene, foamed polypropylene, foamed polyurethane, or the like.

From the viewpoint of impact absorptivity, waterproof property, workability, lightness, or the like, it is preferable that the synthetic resin foam body be formed of foamed polystyrene.

It is preferable that the synthetic resin foam body have hardness of the degree at which it is not deformed by its own weight but is deformed by impact.

Accordingly, even when not only the impact during the transport but also vibration of a scaffold which the operator boards such as vibration of an engine of a bucket car during the working occurs, the synthetic resin foam body can absorb the impact and the vibration.

Moreover, in order to transport articles required in the working along with the fusion splicing machine 10 and the working table 20, the storage box 40 includes an accessory storage portion in the inner portion.

In FIG. 2, first accessory storage portions 43 are provided on the working surface 22 of the working table 20, and second accessory storage portions 44 are provided below the working surface 22.

The articles stored in the first accessory storage portions 43 can be used or extracted by only opening the cover 70 (without moving the working table 20).

Accordingly, it is preferable that the first accessory storage portions 43 store the articles (for example, reinforcing sleeve, alcohol bottle, or the like) which are used in the splicing work every time.

It is preferable that the second accessory storage portions 44 store articles having low extraction frequency such as a spare battery, an AC adaptor, articles used as a spare, or the like.

The cover inner layer 81 includes a fusion splicing machine accommodation recessed portion 85 in which the fusion splicing machine 10 is accommodated, and article storage recessed portions 86 which secure the first accessory storage portions 43.

The cover 70 (specifically, the cover inner layer 81) includes partitions 87 between the first accessory storage portions 43 and the fusion splicing machine 10.

Accordingly, it is possible to prevent the articles which are placed on the working surface 22 and are stored in the first accessory storage portions 43 from applying impact or the like to the fusion splicing machine 10 in the state where the cover 70 is closed.

Moreover, if the cover 70 is opened, the partitions 87 are removed along with the cover 70.

Accordingly, the partitions 87 do not obstruct working in which the optical fiber subjected to the preparation is moved from the working surface 22 to the fusion splicing machine 10.

Moreover, the working table 20 includes partition walls between the second accessory storage portions 44 and the fusion splicing machine 10.

Here, the side portions 33 of the fusion splicing machine installation portion 30 in the working table 20 function as the partition walls.

Accordingly, it is possible to prevent the articles which are stored in the second accessory storage portions 44 from applying impact or the like to the fusion splicing machine 10.

According to the optical fiber fusion splice system of the present embodiment, when the cover 70 of the storage box 40 is opened or the cover 70 is removed, the fusion splicing machine 10 and the working table 20 in the storage box 40 are provided in the state where the fusion splicing machine 10 and the working table 20 are not obstructed for the splicing work, and the fusion splicing working can start without repositioning the fusion splicing machine 10 or the working table 20.

The storage box 40 has an impact absorption function from all directions, and a breakdown of the fusion splicing machine 10 which is a precision device can be prevented during the transport.

Moreover, it is possible to protect the fusion splicing machine 10 from rain or dust.

In addition, the working table 20 is extracted from inside the storage box 40 along with the fusion splicing machine 10 installed in the working table 20, and thus, the fusion splice working can be performed in a state of being separated from the storage box 40.

Moreover, only the fusion splicing machine 10 can be extracted from the fusion splicing machine installation portion 30 without extracting the working table 20 from the storage box 40.

Accordingly, even when the installation of the storage box 40 is not suitable such as when the work place is narrow, the fusion splice working can be performed.

In high-location work such as work on a telephone pole or work near an overhead wire, and also in an environment where vibration occurs such as when an operator boards a bucket of a bucket car (a crane vehicle in which a bucket is mounted on the tip of a crane), brings the optical fiber fusion splice system, and performs the fusion splice working, vibration is blocked by the synthetic resin foam body, and the fusion splicing machine 10 can be protected.

Since the working table 20 stored in the storage box 40 is positioned at a relatively high position from the ground (floor surface), the splicing work to particularly install or fix the working table is not required, and the fusion splice working can be performed in a state where the storage box 40 is placed on the ground (floor surface).

When four legs are provided on the bottom surface of the storage box, even when the work ground is inclined or is not a plane, the working table does not slide and the fusion splice working can be stably performed.

### <Second Embodiment>

FIGS. 10 to 21 show an optical fiber fusion splice system according to a second embodiment of the present invention.

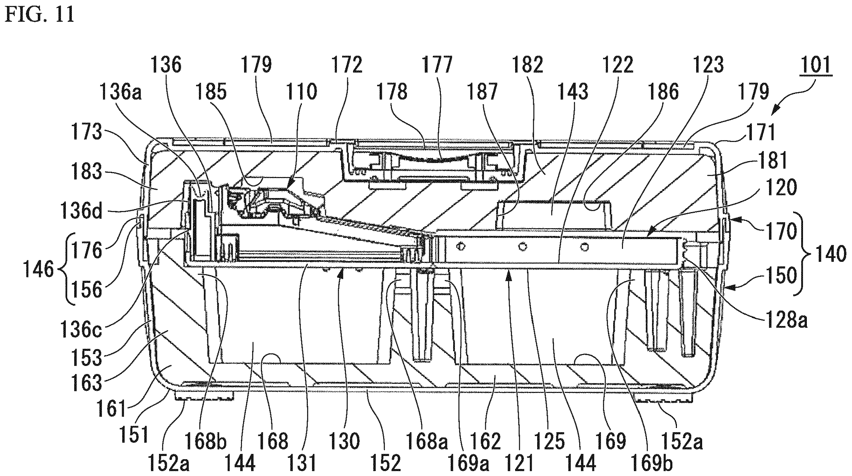

As shown in FIGS. 10 and 11, an optical fiber fusion splice system 101 is configured to store a fusion splicing machine 110 and a working table 120 in a storage box 140.

With respect to the second embodiment, the same names are assigned to the configurations corresponding to the first embodiment, and duplicated descriptions thereof may be omitted or simplified.

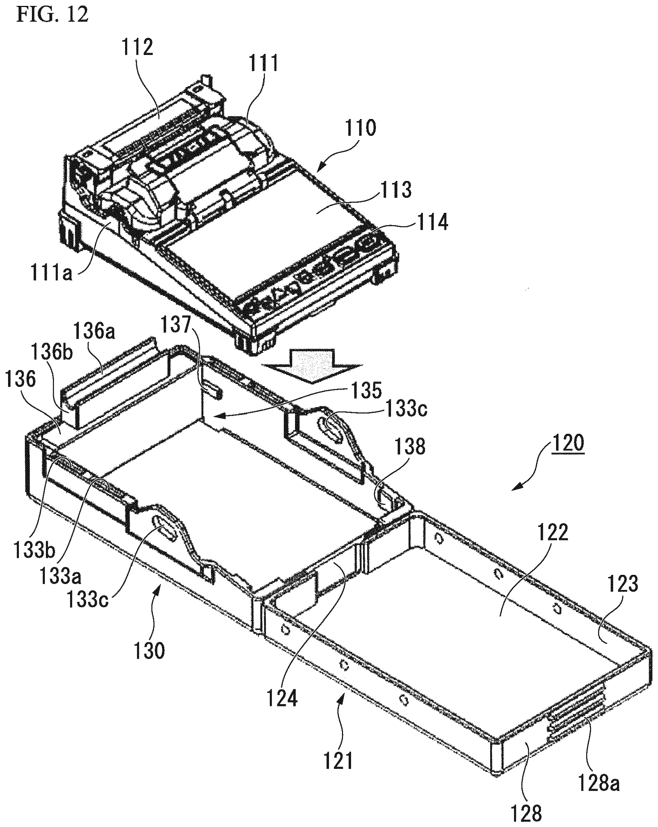

As shown in FIG. 12, similar to the fusion splicing machine 10 according to the first embodiment, the fusion splicing machine 110 includes a reinforcing sleeve heating portion 112, an indicator 113, an operating portion 114, or the like in addition to a fusion splicing portion 111.

However, as the indicator 113, a fixed type which is fixed onto the upper surface of the fusion splicing portion 111 is adopted.

In the indicator 113, a front side (a lower and right side in FIG. 12) facing the operator becomes low, and the indicator 113 is inclined at an angle which is easy to view.

The fusion splicing machine 110 is accommodated in a fusion splicing machine installation portion 130 of the working table 120.

Moreover, the working table 120 includes a work tray 121 to perform the preparation work for the optical fiber.

The work tray 121 includes an approximately rectangular working surface 122, and a falling prevention protrusion 123 which is provided in the outer circumference of the working surface 122.

The articles used in the preparation work, the dimensions of the working surface 122, or the like may be similar to those of the first embodiment.

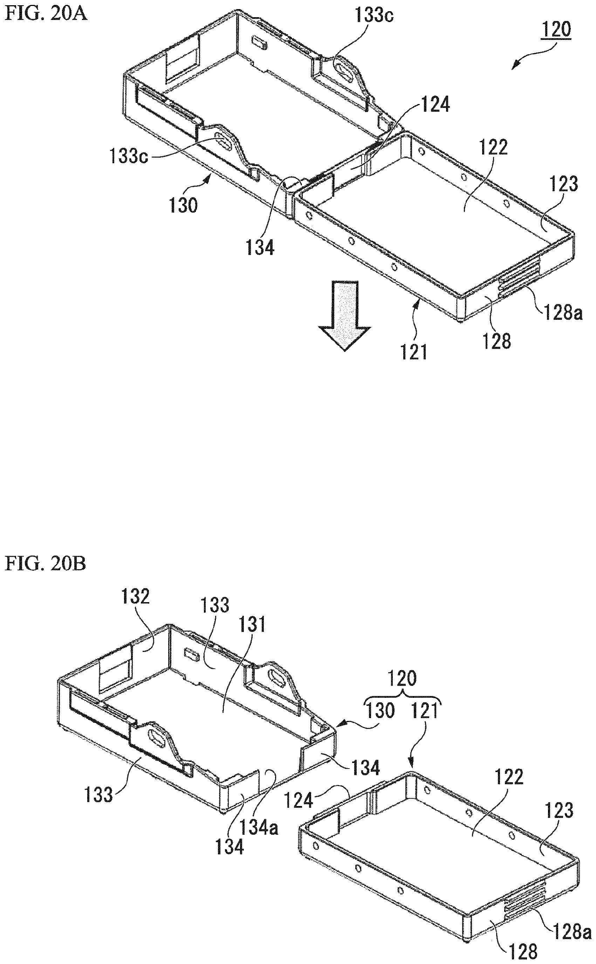

As shown in FIGS. 20A and 20B, the work tray 121 and the fusion splicing machine installation portion 130 in the working table 120 can be attached to and detached from each other.

The fusion splicing machine installation portion 130 includes a bottom portion 131 which supports the fusion splicing machine 110, a back portion 132 which is provided at the rear side of the fusion splicing machine 110, a pair of side portions 133 which are provided in both of the left and right sides of the bottom portion 131 and the back portion 132, and a front portion 134 which can be connected to the work tray 121.

The bottom portion 131 has an approximately rectangular shape, and four sides of the bottom portion 131 are surrounded by the back portion 132, the side portions 133 and 133, and the front portion 134.

By engaging a notch portion 134a of the front portion 134 with a connection portion 124 which is provided on one side of the work tray 121, the work tray 121 and the fusion splicing machine installation portion 130 can be connected to each other.

Protrusions 128a, which extend in a horizontal direction, are formed on an end wall portion 128 opposite to the connection portion 124.

The protrusions 128a function as a sliding prevention portion when a shoulder hanging belt (described in detail below) is mounted to the working table 120, the working table 120 is hung from a neck, the end wall portion 128 is pressed to the abdomen, and the working table 120 is used.

In a case where the work tray 121 which is separated from the fusion splicing machine installation portion 130 is stored, even when the work tray 121 is rotated 180° and the end wall portion 128 instead of the connection portion 124 faces the front portion 134 of the fusion splicing machine installation portion 130, the working table 120 can be stored in the box main body 150.

As shown in FIG. 12, the fusion splicing machine installation portion 130 includes a fusion splicing machine restriction portion 135 which restricts the fusion splicing machine 110 so that the fusion splicing machine 110 does not move in a horizontal direction with respect to the fusion splicing machine installation portion 130 (that is, with respect to the working table 120).

Here, the gap is filled up by interposing a pressing plate 136 between the fusion splicing machine 110 and the back portion 132 of the fusion splicing machine installation portion 130, and the horizontal movement of the fusion splicing machine 110 is restricted.

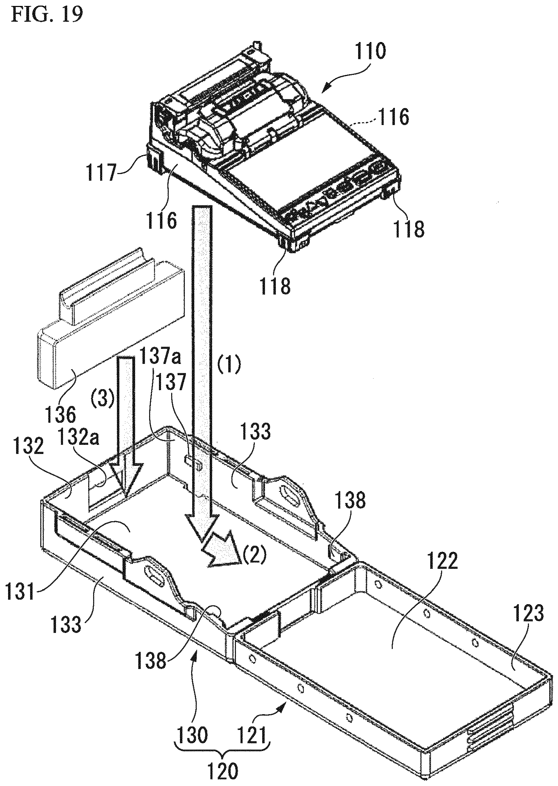

Specifically, after the fusion splicing machine 110 is mounted while being pressed to the back portion 132 as shown in a down arrow (1) of FIG. 19 in a state where the pressing plate 136 is removed from the fusion splicing machine installation portion 130, the fusion splicing machine 110 is moved to the front side as shown in an arrow (2).

In the step of (1), rear protrusion portions 117 of the fusion splicing machine 110 are installed on the bottom portion 131 through spaces 137a between rear protrusion portions 137 inside the side portions 133 and the back portion 132 of the fusion splicing machine installation portion 130.

In the step of (2), the rear protrusion portions 117 and front protrusion portions 118 of the fusion splicing machine 110 enter the lower sides of the rear protrusion portions 137 and front protrusion portions 138 inside side portions 133 of the fusion splicing machine installation portion 130.

Finally, as shown by a down arrow (3), by inserting the pressing plate 136 between the back portion 132 and the fusion splicing machine 110, the fusion splicing machine 110 is restricted.

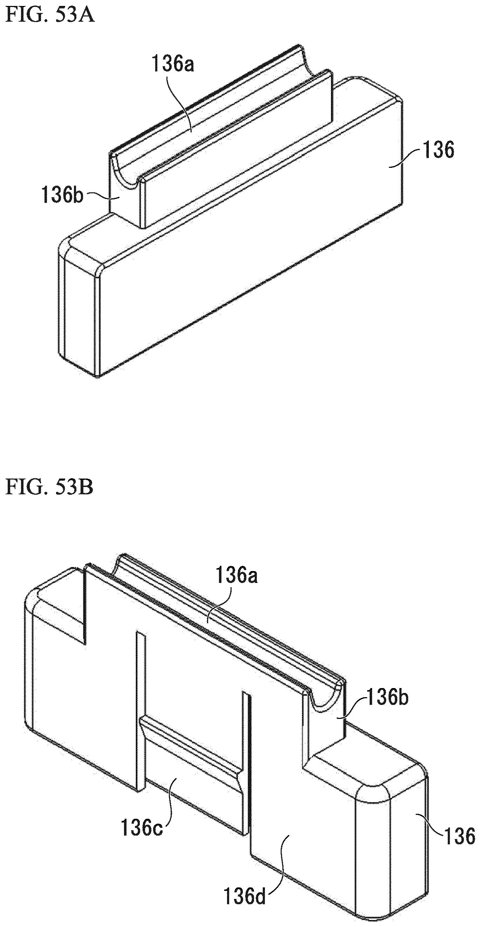

As shown in FIGS. 19 and 53B, the pressing plate 136 includes a locking claw 136c on a rear surface 136d side.

By engaging the locking claw 136c with a locking hole 132a formed on the back portion 132 of the fusion splicing machine installation portion 130, drawing out of the pressing plate 136 is prevented.

If the locking claw 136c is pushed from the rear side of the back portion 132 through the locking hole 132a, engagement between the locking claw 136c and the locking hole 132a is released, and the drawing out of the pressing plate 136 is possible.

Moreover, in FIG. 19, only one side of the rear protrusion portions 137 of the fusion splicing machine installation portion 130 is shown. However, similar to the front protrusion portions 138, the rear protrusion portions 137 are formed in both of the side portions 133.

Similarly, the rear protrusion portions 117 and the front protrusion portions 118 of the fusion splicing machine 110 are also formed in both side portions 116 of the fusion splicing machine 110 respectively.

In FIGS. 20A and 20B, the side portions 133 of the fusion splicing machine installation portion 130 include belt holes 133c through which the shoulder hanging belt, the strap (not shown), or the like can pass when the working table 120 is hung on the shoulder.

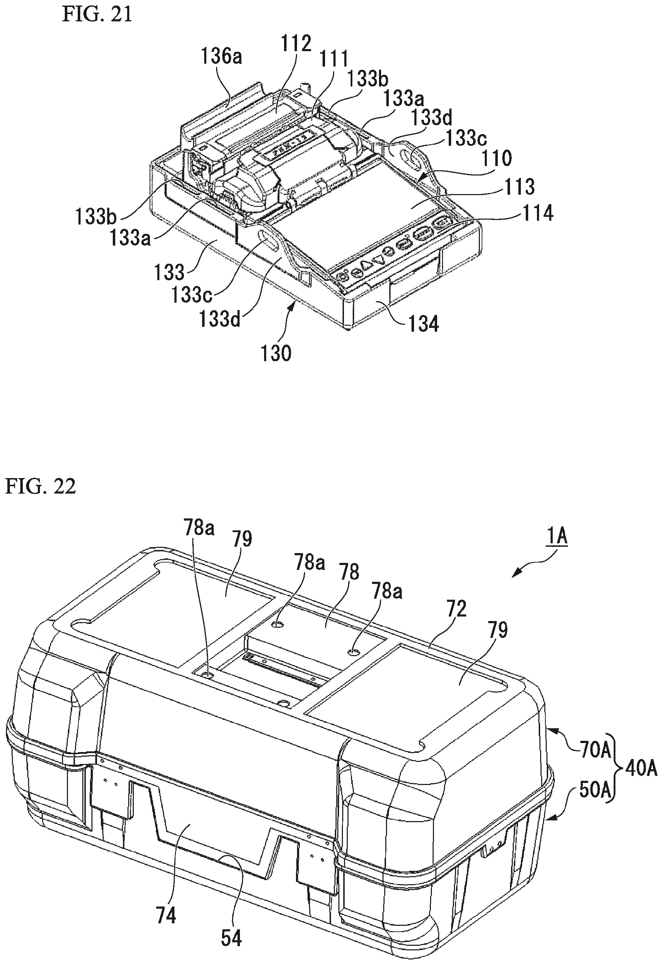

As shown in FIG. 21, the work tray 121 is removed, and only the fusion splicing machine installation portion 130 on which the fusion splicing machine 110 is installed can be hung on a shoulder.

In order to attach and detach the belt in a state where the fusion splicing machine 110 is installed, the belt holes 133c are formed in ear-shaped protrusion portions 133d protruding upward from the side portions 133.

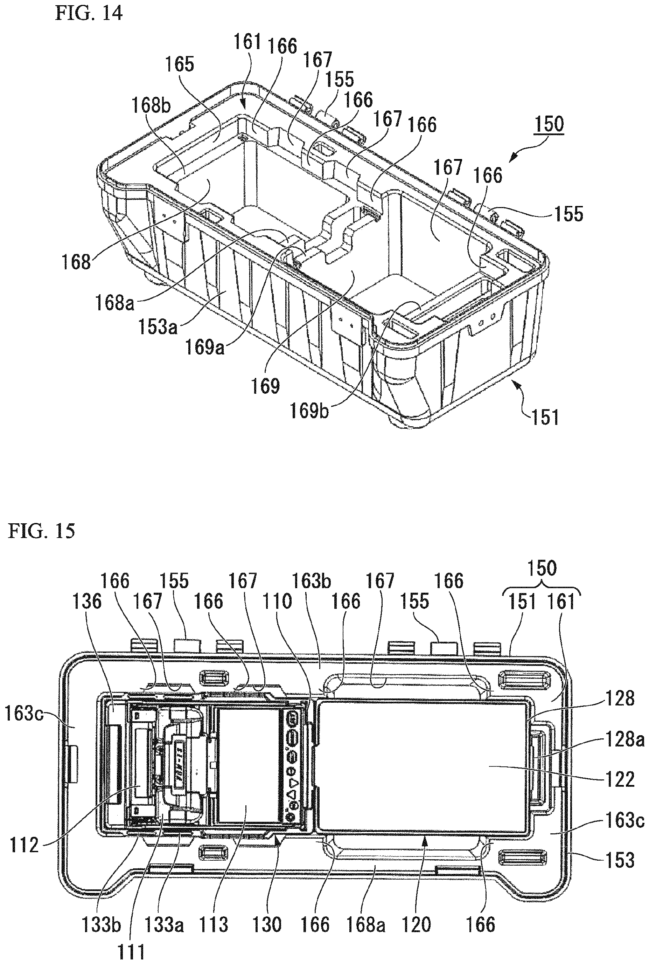

As shown in FIGS. 12 and 15, fixation holes 133a and 133b into which the optical fiber transportation jig (not shown) is inserted are provided in both (the upper ends of the side portions 133) of the left and right sides of the fusion splicing machine installation portion 130.

Front fixation holes 133a are disposed in both of the left and right sides of the fusion splicing portion 111, and inner fixation holes 133b are disposed in both of the left and right sides of the reinforcing sleeve heating portion 112.

Similar to the first embodiment, the optical fiber transportation jig and the fixation holes can be used when the optical fiber after the fusion splice is transported from the fusion splicing portion 111 to the reinforcing sleeve heating portion 112.

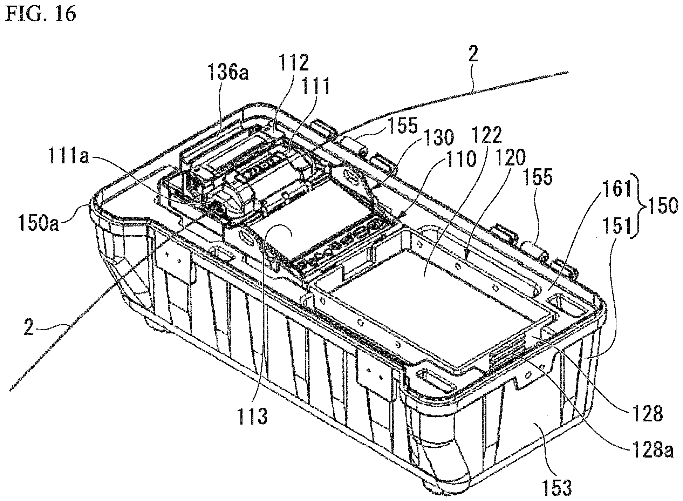

In addition, as shown in FIGS. 16, 53A, and 53B, an optical fiber installation stand 136a on which the connected optical fiber reinforced by the reinforcing sleeve heating portion 112 is installed is provided on the upper portion of the pressing plate 136.

For example, the optical fiber installation stand 136a in the shown example has a configuration in which a dent (groove) having a U-shaped cross-section is provided on the upper end 136b of the pressing plate 136.

For example, the work tray 121 and the fusion splicing machine installation portion 130 may be configured of thermoplastic resin, thermosetting resin, or the like.

In the pressing plate 136, at least the locking claw 136c needs to be elastically deformable. However, the entirety of the pressing plate 136 may be an integral molded article of a resin or the like.

As shown in FIG. 11, the fusion splicing machine 110 is stored in the storage box 140 in the state where the fusion splicing machine 110 is mounted on the fusion splicing machine installation portion 130 of the working table 120.

Similar to the first embodiment, the storage box 140 includes a box main body 150 in which the working table 120 on which the fusion splicing machine 110 is mounted is stored, and a cover 170 which covers the upper portion of the box main body 150.

In order to secure an impact absorbing function for protecting the fusion splicing machine 110 or the like, similar to the first embodiment, the storage box 140 includes the configurations discussed below.

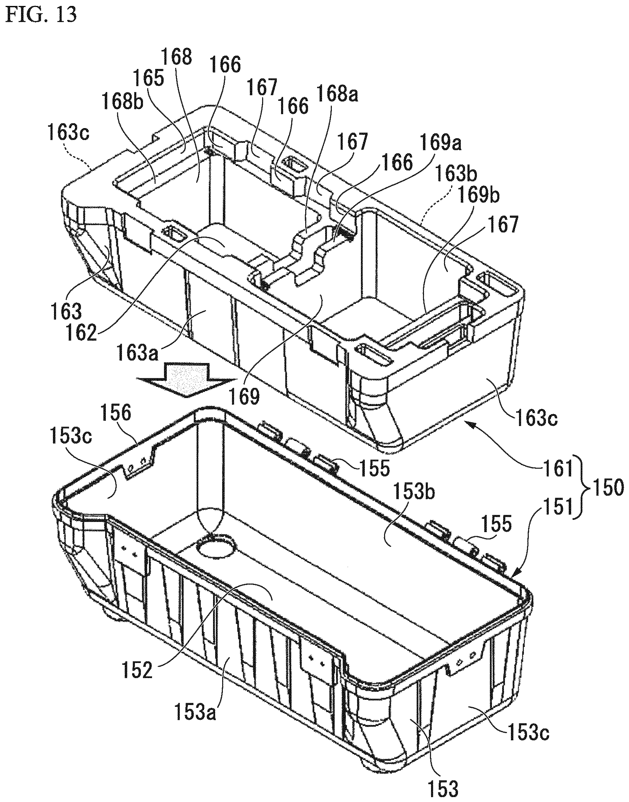

As shown in FIGS. 13 and 14, the box main body 150 has a two-layer structure which is configured of a box main body outer layer 151 formed of a rigid thermoplastic resin, and a box main body inner layer 161 formed of a synthetic resin foam body.

The box main body outer layer 151 includes an approximately rectangular bottom portion 152 and a side wall portion 153 which is erected (is provided to be approximately perpendicular to a bottom portion 152) around the bottom portion 152.

Similarly, the box main body inner layer 161 includes an approximately rectangular bottom portion 162 and a side wall portion 163 which is erected around the bottom portion 162.

The box main body outer layer 151 and the box main body inner layer 161 are fitted to each other so that the bottom portion 152 contacts the bottom portion 162, the front wall 153a contacts the front wall 163a, the rear wall 153b contacts the rear wall 163b, and the end wall 153c contacts the end wall 163c.

As shown in FIGS. 15 and 16, if the working table 120 on which the fusion splicing machine 110 is mounted is stored in the box main body 150, the box main body inner layer 161 formed of the synthetic resin foam body is configured to surround the periphery of the working table 120.

The box main body inner layer 161 includes a working table fitting portion 165 having a shape which is fitted to the working table 120 so that the box main body outer layer 151 does not contact the working table 120 (refer to FIGS. 13 and 14).

The box main body inner layer 161 formed of the synthetic resin foam body is interposed between the box main body outer layer 151 and the working table 120, and thus, impact which is transmitted from outside the box to the working table 120 can be dampened.

In addition, in the box main body inner layer 161, all portions of the inner layer 161 do not need to be formed of the synthetic resin foam body, and at least a portion of the inner layer 161 may be formed of the synthetic resin foam body.

Moreover, it is preferable that at least the working table fitting portion 165 be formed of the synthetic resin foam body.

In addition, the box main body inner layer 161 has a shape which is shrunk by impact between the box main body inner layer 161 and the working table 120.

Specifically, in the working table fitting portion 165, the box main body inner layer 161 includes protrusions 166 in which the synthetic resin foam body configuring the box main body inner layer 161 contacts the working table 120, and recessed portions 167 in which the synthetic resin foam body does not contact the working table 120.

The protrusions 166 are interposed between the working table 120 and the side wall portion 153 of the box main body outer layer 151.

Accordingly, when impact such as rolling occurs, the protrusions 166 (synthetic resin foam body) are shrunk, and the working table 120 and the box main body outer layer 151 are prevented from contacting each other.

It is preferable that the working table fitting portion 165 have three or more protrusions 166 around the working table 120.

Moreover, the working table fitting portion 165 may include the protrusions 166 which are provided in two places opposite to each other around the working table 120 according to the protruded lengths of the protrusions 166 along the periphery of the working table fitting portion 165.

If the protrusions 166 and the recessed portions 167 are alternately provided, compared to a case where the synthetic resin foam body of the box main body inner layer 161 contacts the working table 120 over the entire circumference therof, shrink characteristics of the protrusions 166 are improved, and thus, become preferable.

Moreover, similar to the protrusions 166 and the recessed portions 167 in the side surfaces (the side wall portion 163 of the box main body inner layer 161) of the working table fitting portion 165, also in the bottom portion 162 side of the box main body inner layer 161, protrusions in which the synthetic resin foam body configuring the box main body inner layer 161 contacts the working table 120, and recessed portions in which the synthetic resin foam body does not contact the working table 120 are provided.

Specifically, as shown in FIGS. 11 and 13, abutment portions 168a and 168b which contact the bottom portion 131 of the fusion splicing machine installation portion 130 and abutment portions 169a and 169b which contact the bottom portion 125 of the work tray 121 are provided in the box main body inner layer 161.

An article storage recessed portion 168, which can store articles or the like below the fusion splicing machine installation portion 130, is formed between the abutment portions 168a and 168b contacting the fusion splicing machine installation portion 130.

An article storage recessed portion 169, which can store articles or the like below the working surface 122, is formed between the abutment portions 169a and 169b contacting the work tray 121.

In the storage box 140, in a state where the cover 170 (refer to FIG. 11) is opened (the cover 170 may be removed or may not be removed from the box main body 150), as shown in FIG. 16, the fusion splicing working can be performed using the fusion splicing machine 110 and the working table 120 in a state where the working table 120 on which the fusion splicing machine 110 is mounted is stored in the box main body 150.

Since the fusion splicing portion 111 and the reinforcing sleeve heating portion 112 of the fusion splicing machine 110 are positioned above the working table 120, the fusion splicing machine 110 can be easily operated in a state where the fusion splicing machine 110 is stored in the box main body 150 or the working table 120.

Particularly, in the fusion splicing portion 111, ends of left and right optical fibers 2 approach each other from a state where the end surfaces are separated from each other, butt against each other, and are heated and fused.

Accordingly, in order to prevent inhibition of the forward movement in which the optical fibers 2 approach each other, it is preferable that the box main body 150 (box main body outer layer 151 and box main body inner layer 161) and the working table 120 be positioned below a horizontal plane which is positioned at heights of fiber outlet portions 111a and 111a of the respective left and right sides of the fusion splicing portions 111.

However, in the portion through which the optical fiber 2 does not pass, the box main body 150 or the working table 120 may be partially disposed to be above the heights of the fiber outlet portions 111a.

In the box main body 150, it is preferable that at least the bottom portion 152 have a waterproof property so that water does not infiltrate into the inner portion of the storage box 140.

In addition, as shown in FIGS. 10 and 11, the storage box 140 includes the cover 170 which covers the upper portion of the box main body 150.

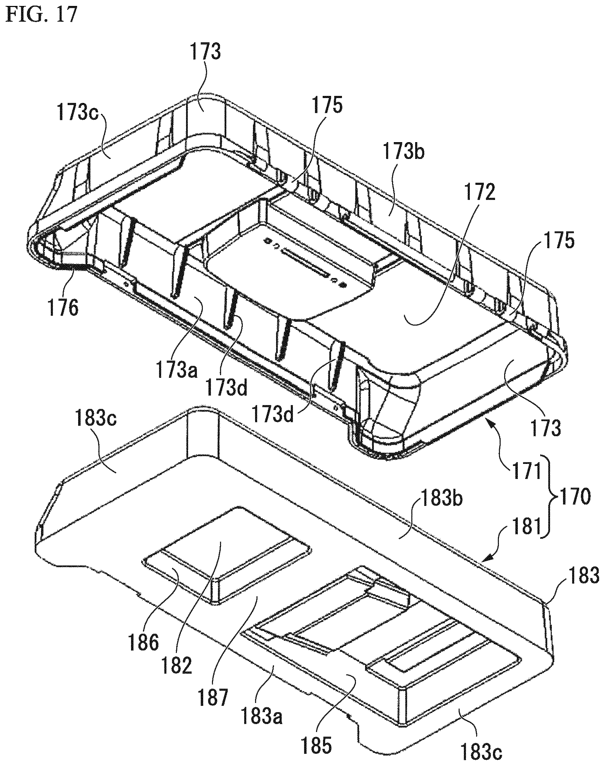

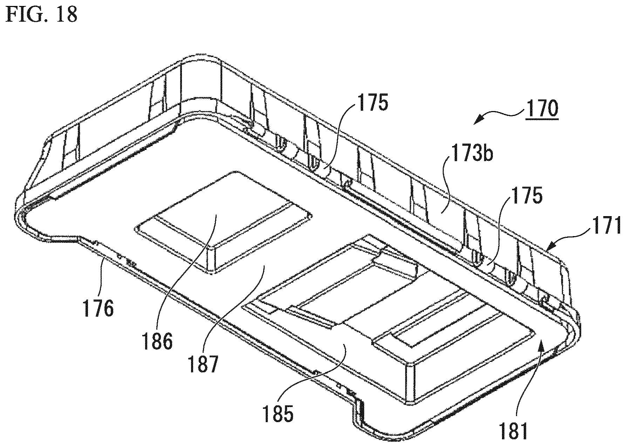

As shown in FIGS. 17 and 18, the cover 170 has a two-layer structure which is configured of a cover outer layer 171 formed of a rigid thermoplastic resin, and a cover inner layer 181 formed of a synthetic resin foam body.

The cover outer layer 171 includes an approximately rectangular top portion 172, and a side wall portion 173 which is formed around the top portion 172.

Similarly, the cover inner layer 181 includes an approximately top portion 182 and a side wall portion 183 which is formed around the top portion 182.

The cover outer layer 171 and the cover inner layer 181 are fitted to each other so that the top portion 172 contacts the top portion 182, the front wall 173a contacts the front wall 183a, the rear wall 173b contacts the rear wall 183b, and the end wall 173c contacts the end wall 183c.

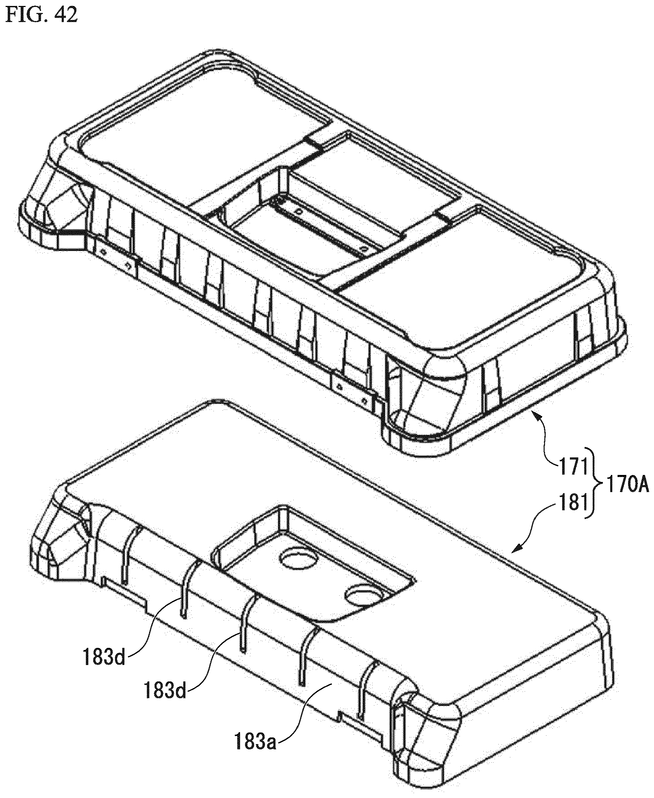

Similar to the first embodiment, ribs 173d of the cover outer layer 171 and grooves 183d of the cover inner layer 181 (refer to FIGS. 42) extend in a perpendicular (up-down) direction, and thus, can increase the strength of the cover outer layer 171.

As shown in FIG. 11, the cover inner layer 181 has a configuration in which the cover outer layer 171 does not contact the working table 120.

The cover inner layer 181 configured of a synthetic resin foam body is interposed between the cover outer layer 171 and the working table 120, and thus, impact which is transmitted from the outside of the box or the cover to the working table 120 can be damped.

Similar to the first embodiment, the cover 170 has a waterproof property, and in the state where the cover 170 is closed (refer to FIG. 10), blocking rain or dust is possible.

Moreover, although they are not indispensible components, similar to the first embodiment, a hanging strap 177, a fusion splicing machine installation portion 178, and a working plane 179 are provided on the top portion 172 of the cover 170.

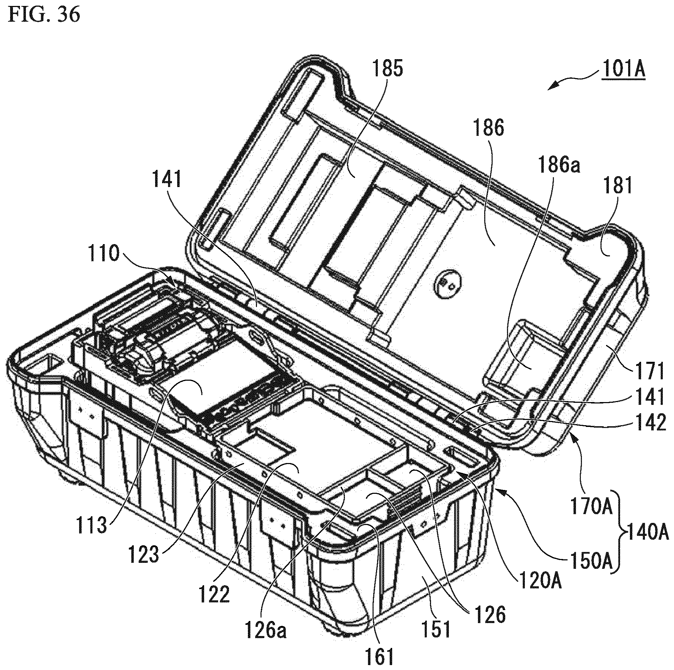

Similar to the first embodiment, the box main body 150 and the cover 170 are connected to each other by rotary hinges 141 (refer to FIG. 36) which are configured so that hinge bearings 155 and 175 (refer to FIGS. 13 and 14 with respect to the hinge bearings 155 and refer to FIGS. 17 and 18 with respect to the hinge bearings 175) are combined and hinge shafts 142 pass through the hinge bearings 155 and 175.

When the fusion splicing machine 110 or the working table 120 are used with open the cover 170, as shown in FIG. 7, a structure in which the cover is removed may be adopted.

Moreover, a structure in which the rotary hinges capable of rotating 180° or more, and the like are used and the cover is retreated to an unobstructed position when working may be adopted.

Similar to the first embodiment, a fitting portion 146 (refer to FIG. 11), which is formed by combining a protrusion 156 (refer to FIGS. 13 and 14) with a groove 176 (refer to FIGS. 17 and 18), is provided between the upper end of the box main body 150 and the lower end of the cover 170.

The fitting portion 146 is provided so as to be sealed so that gaps which cause water leaks or the like are not generated.

As shown in FIG. 11, similar to the first embodiment, all sides of the working table 120 on which the fusion splicing machine 110 is mounted are surrounded by the box main body inner layer 161 and the cover inner layer 181 formed of the synthetic resin foam body, and thus, the storage box 140 in which the cover 170 is closed has an impact absorption effect.

Accordingly, the storage box 140 can be transported to any place.

Moreover, in order to transport articles required in the working along with the fusion splicing machine 110 and the working table 120, the storage box 140 includes an accessory storage portion in the inner portion.

In FIG. 11, a first accessory storage portion 143 is provided on the working surface 122 of the working table 120, and second accessory storage portions 144 are provided below the working surface 122.

The second accessory storage portions 144 are provided not only below the work tray 121 but also below the fusion splicing machine installation portion 130.

The cover inner layer 181 includes a fusion splicing machine accommodation recessed portion 185 in which the fusion splicing machine 110 is accommodated, and an article storage recessed portion 186 which secures the first accessory storage portion 143.

The cover 170 (specifically, the cover inner layer 181) includes a partition 187 between the first accessory storage portion 143 and the fusion splicing machine 110.

Accordingly, it is possible to prevent the articles which are placed on the working surface 122 from applying impact or the like to the fusion splicing machine 110 during the transport.

Moreover, if the cover 170 is opened, since the partition 187 is removed along with the cover 170, the partition 187 does not obstruct work in which the optical fiber subjected to the preparation is moved from the working surface 122 to the fusion splicing machine 110.

Moreover, the working table 120 includes a partition wall between the second accessory storage portion 144 and the fusion splicing machine 110.

Here, the bottom portion 131 of the fusion splicing machine installation portion 130 functions as the partition wall.

Accordingly, it is possible to prevent the articles which are stored in the second accessory storage portions 144 from applying impact or the like to the fusion splicing machine 110.

According to the optical fiber fusion splice system of the present embodiment, when the cover 170 of the storage box 140 is opened or the cover 170 is removed, the fusion splicing machine 110 and the working table 120 in the storage box 140 are provided in the state where the fusion splicing machine 110 and the working table 120 do not obstruct working, and the fusion splicing working can start without repositioning the fusion splicing machine 110 or the working table 120.

The storage box 140 has an impact absorption function from all directions, and a breakdown of the fusion splicing machine 110 which is a precision device can be prevented during the transport.

Moreover, it is possible to protect the fusion splicing machine 110 from rain or dust.

In addition, the working table 120 is extracted from inside the storage box 140 along with the fusion splicing machine 110 installed in the working table 120, and thus, the fusion splice working can be performed in a state of being separated from the storage box 140.

Moreover, only the fusion splicing machine 110 can be extracted from the fusion splicing machine installation portion 130 without extracting the working table 120 from the storage box 140.

Accordingly, even when the installation of the storage box 140 is not suitable such as when the work place is narrow, the fusion splice working can be performed.

In high-location work such as work on a telephone pole or work near an overhead wire, and also in an environment where vibration occurs such as when an operator boards a bucket of a bucket car (a crane vehicle in which a bucket is mounted on the tip of a crane), brings the optical fiber fusion splice system, and performs the fusion splice working, vibration is blocked by the synthetic resin foam body, and the fusion splicing machine 110 can be protected.

Since the working table 120 stored in the storage box 140 is positioned at a relatively high position from the ground (floor surface), the work to particularly install or fix the working table is not required, and the fusion splice working can be performed in a state where the storage box 140 is placed on the ground (floor surface).

When four legs 152a (refer to FIGS. 10 and 11) are provided on the bottom surface of the storage box 140, even when the work ground is inclined or is not a plane, the working table does not slide and the fusion splice working can be stably performed.

### <Third Embodiment>

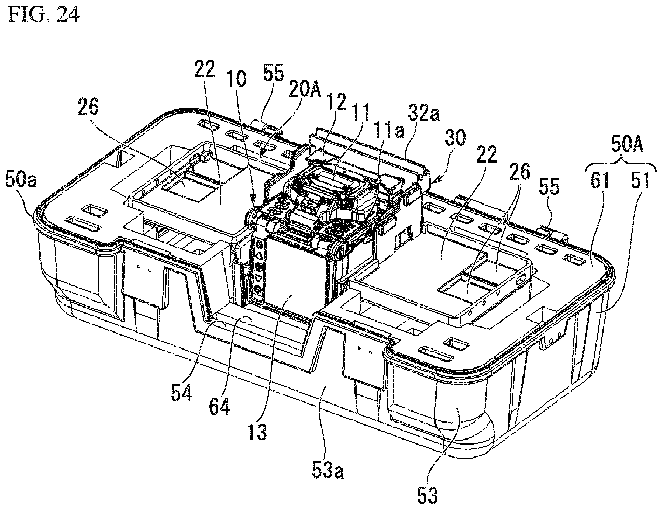

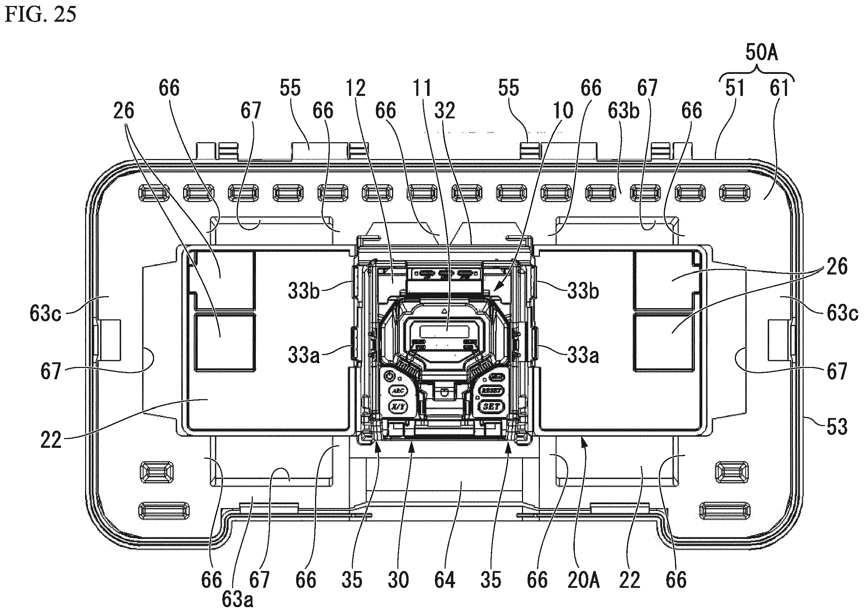

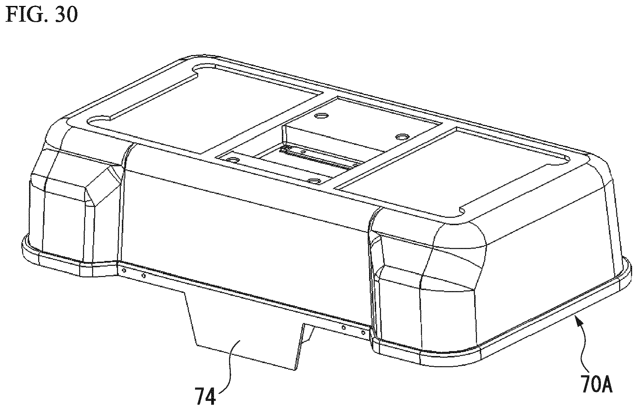

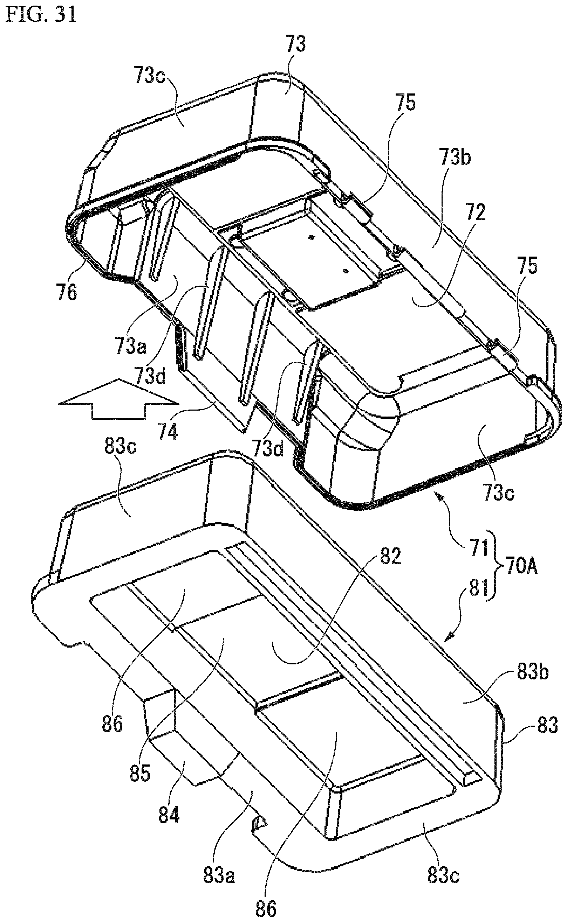

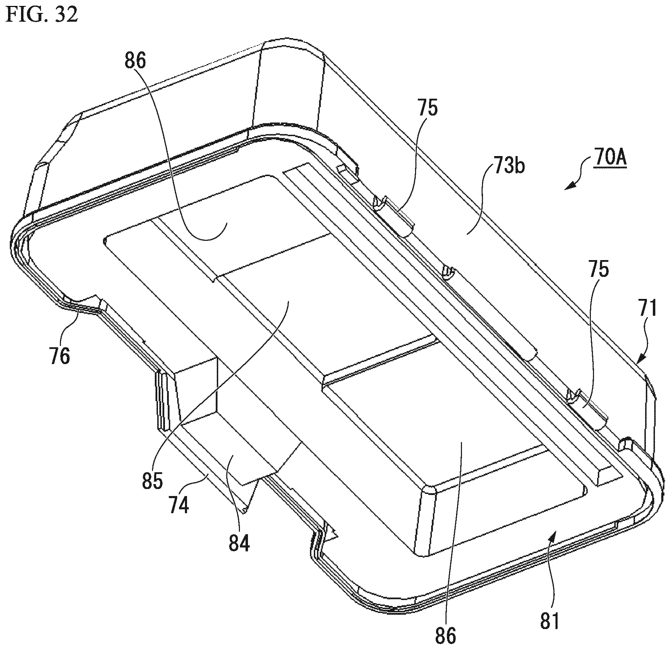

FIGS. 22 to 34 show an optical fiber fusion splice system according to a third embodiment of the present invention.

An optical fiber fusion splice system 1A stores the fusion splicing machine 10 and a working table 20A in a storage box 40A, and the storage box 40A includes a box main body 50A and a cover 70A which covers the upper portion of the box main body 50A (refer to FIGS. 22 to 26).

In the third embodiment, with respect to the configurations of each of the working table 20A, the storage box 40A, the box main body 50A, and the cover 70A, the same reference numerals and names are assigned to configurations corresponding to those of the first embodiment, and duplicated descriptions are omitted here.

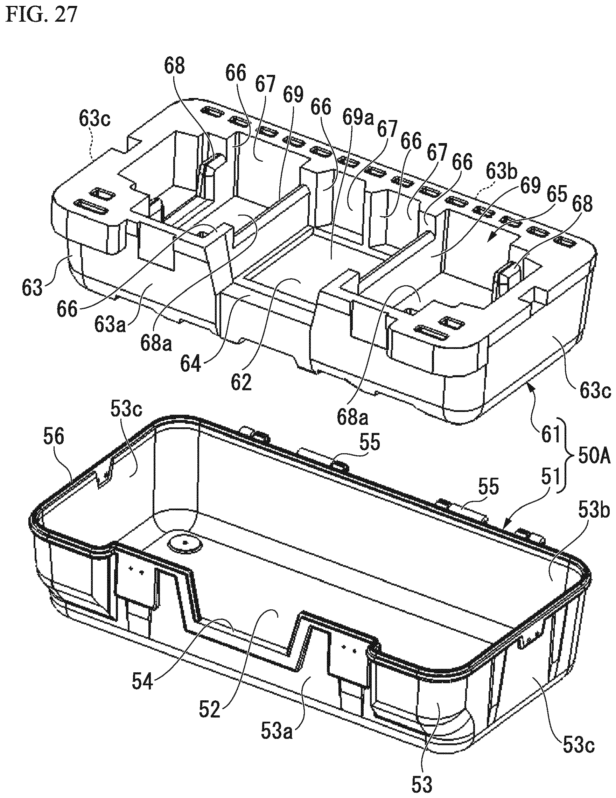

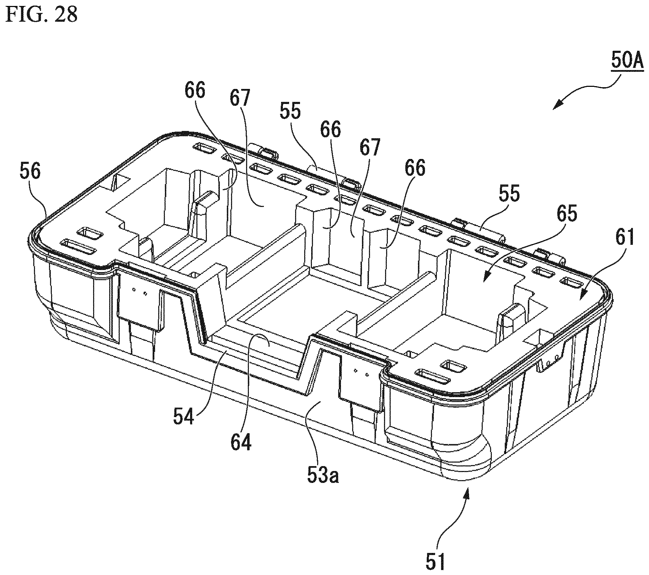

Also in the present embodiment, similar to other embodiments, the box main body 50A has a two-layer structure which is configured of the box main body outer layer 51 formed of a rigid thermoplastic resin, and the box main body inner layer 61 formed of a synthetic resin foam body (refer to FIGS. 27 and 28).

Moreover, the cover 70A has a two-layer structure which is configured of the cover outer layer 71 formed of a rigid thermoplastic resin, and the cover inner layer 81 formed of a synthetic resin foam body (refer to FIGS. 29 to 33).

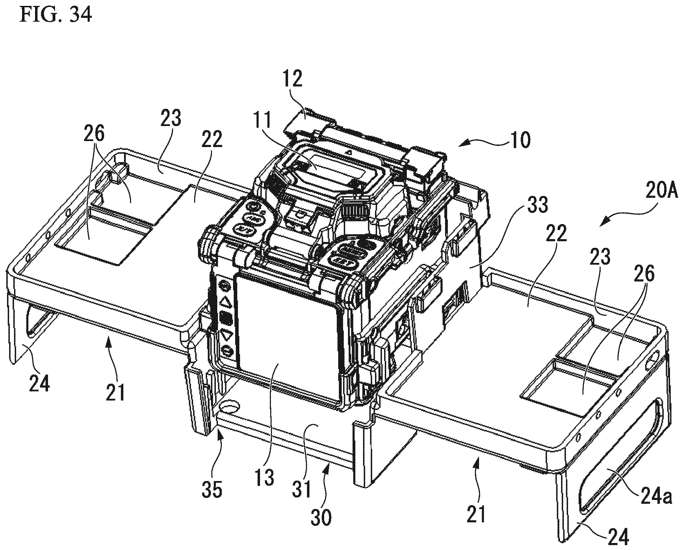

In addition, the working table 20A includes the fusion splicing machine installation portion 30 which accommodates the fusion splicing machine 10, and the working surface 22 on which the preparation work for the optical fiber is performed (refer to FIGS. 33 and 34).

It is needless to say that the optical fiber fusion splice system according to the third embodiment provides effects similar to those of the first embodiment.

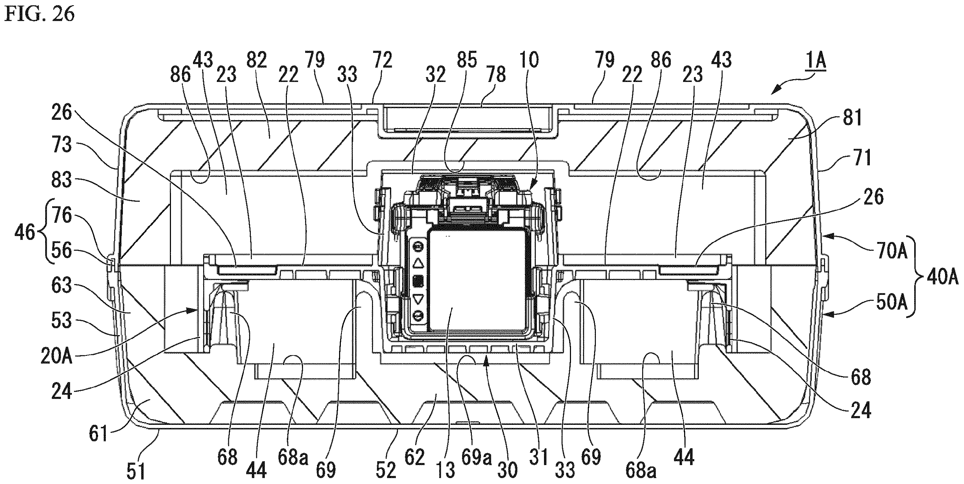

Moreover, in the case of the present embodiment, as shown in FIG. 26, the fusion splicing machine accommodation recessed portion 85 in which the fusion splicing machine 10 inside the cover 70A is accommodated and the article storage recessed portions 86 and 86 which store the articles on the working surface 22 are connected to each other, and thus, the space which stores the articles on the working surface 22 can be secured more widely.

In addition, the working table 20A of the present embodiment includes recessed portions 26 on which articles or the like can be placed on each of the working surfaces 22.

Accordingly, the articles which are in use on the working surface 22 and other articles can be orderly arranged, and thus, the workability is improved.

### <Fourth Embodiment>

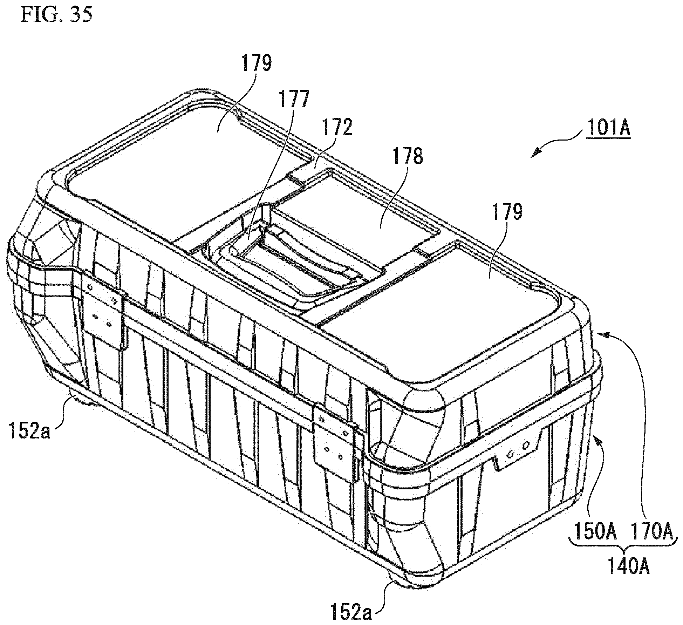

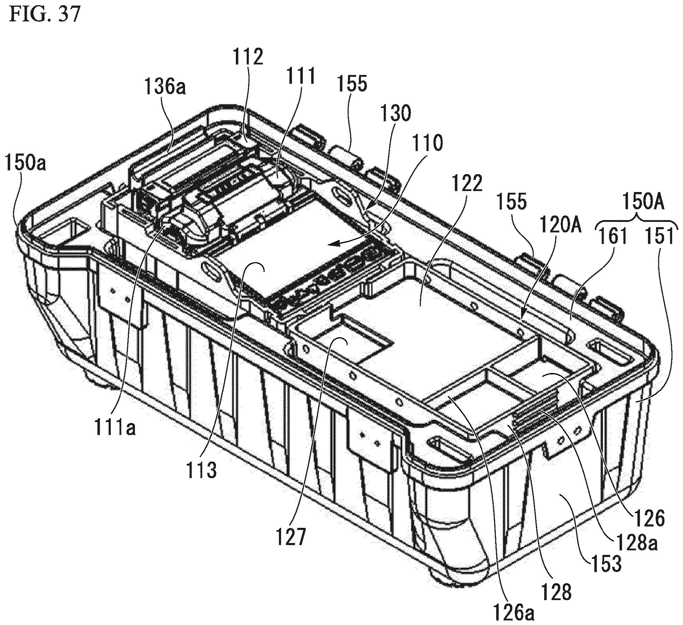

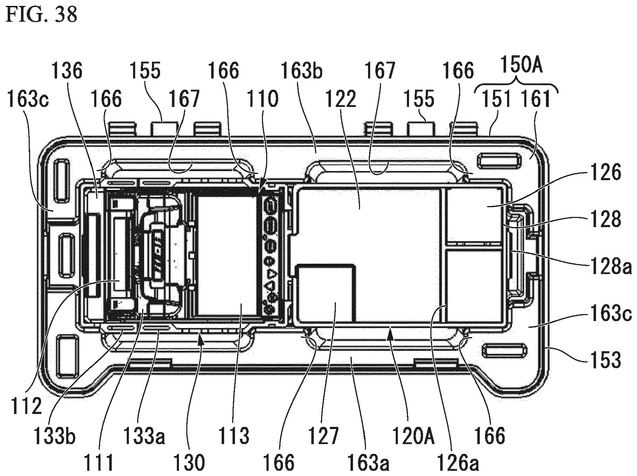

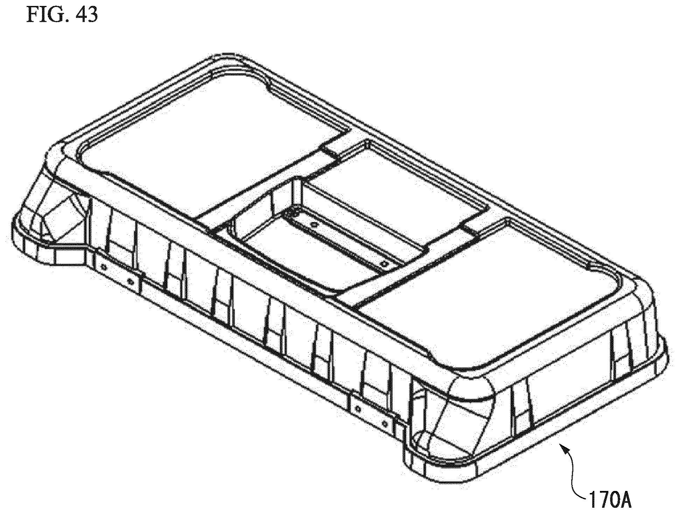

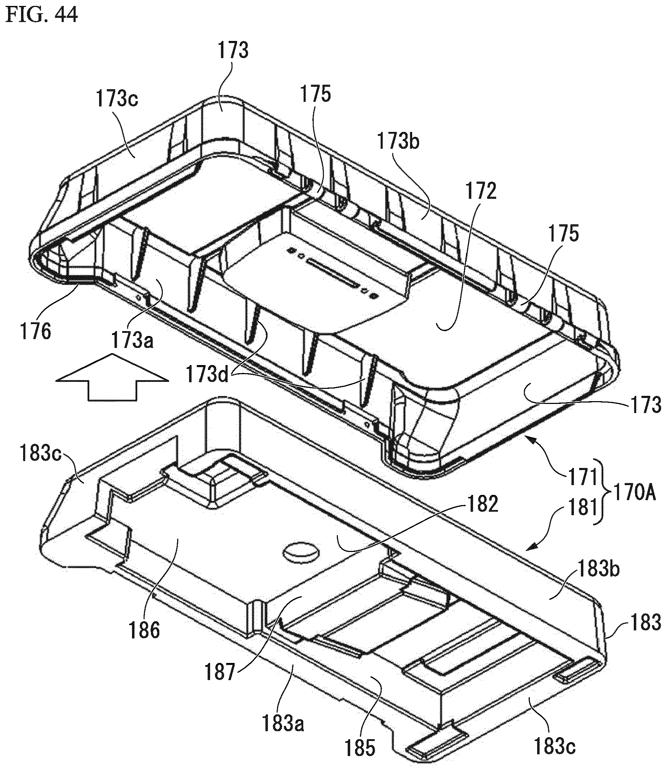

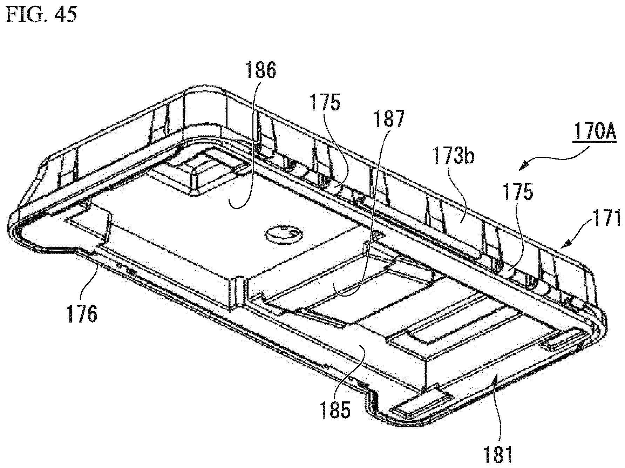

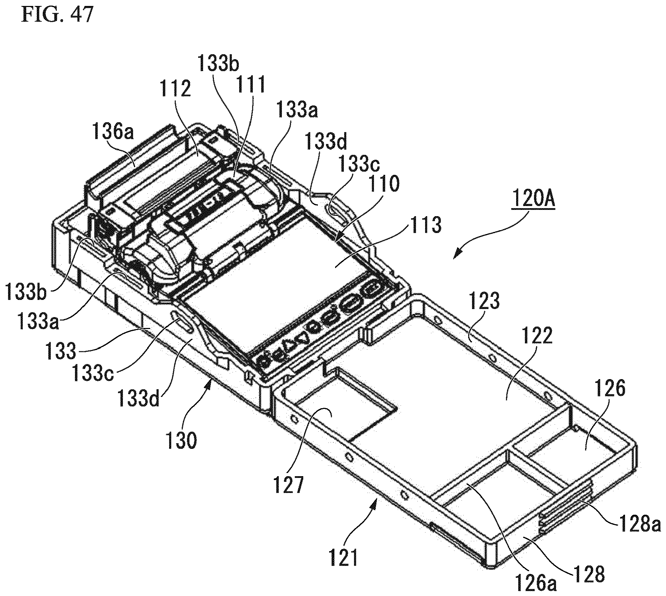

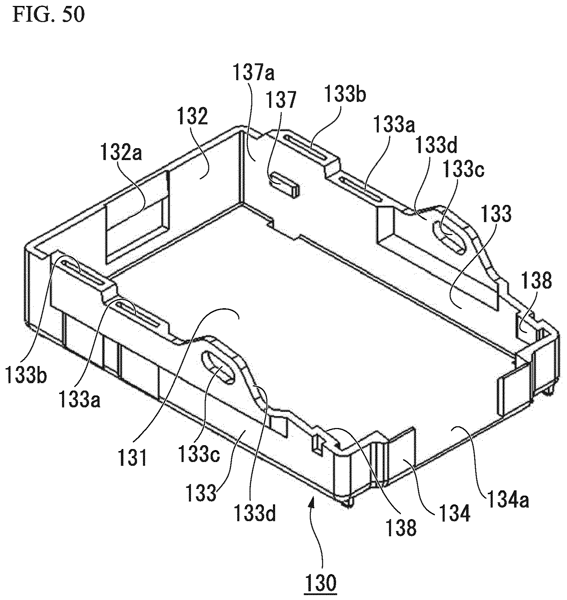

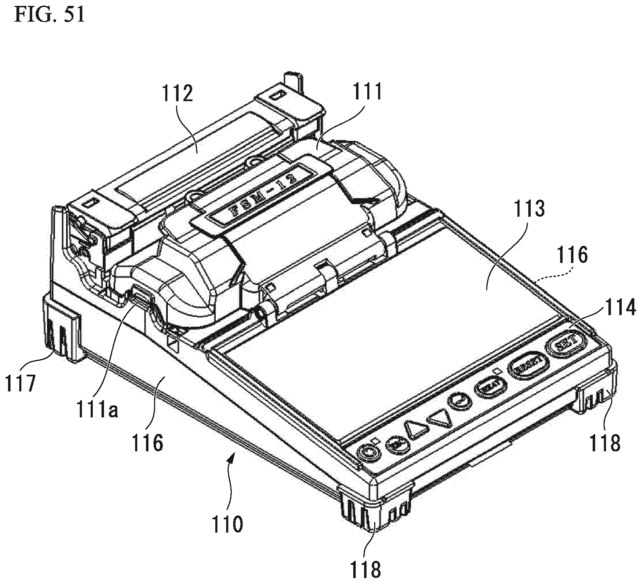

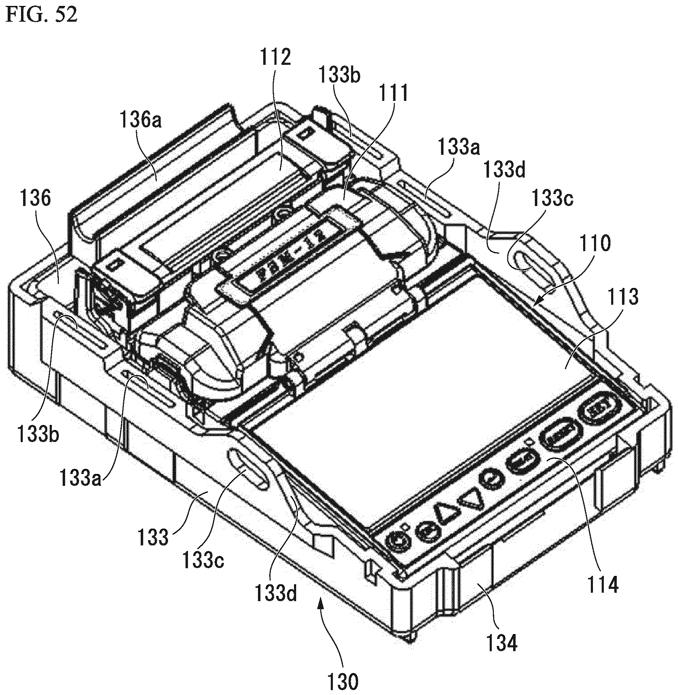

FIGS. 35 to 53B show an optical fiber fusion splice system according to a fourth embodiment of the present invention.

An optical fiber fusion splice system 101A stores the fusion splicing machine 110 and a working table 120A in a storage box 140A, and the storage box 140A includes a box main body 150A and a cover 170A which covers the upper portion of the box main body 150A (refer to FIGS. 35 to 39).

In the fourth embodiment, with respect to the configurations of each of the working table 120A, the storage box 140A, the box main body 150A, and the cover 170A, the same reference numerals and names are assigned to configurations corresponding to those of the second embodiment, and duplicated descriptions are omitted here.

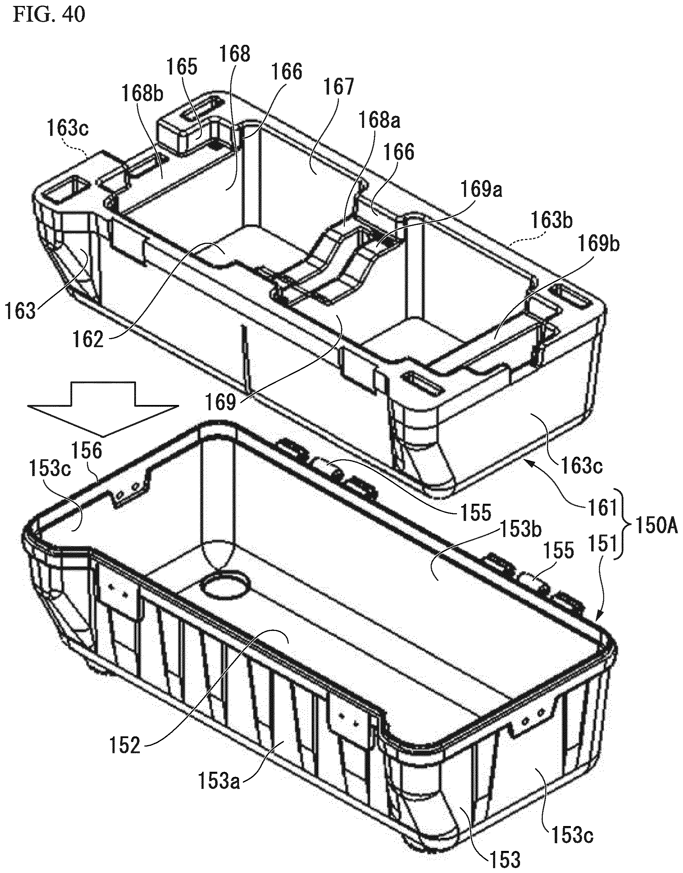

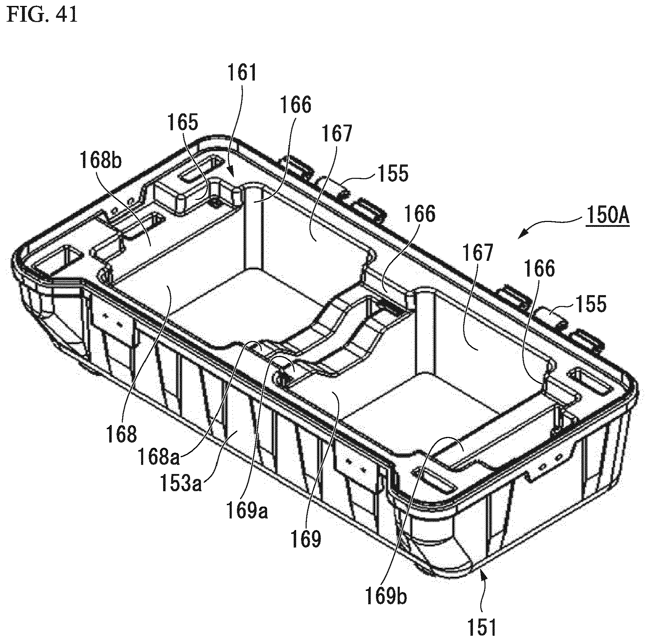

Also in the present embodiment, similar to other embodiments, the box main body 150A has a two-layer structure which is configured of the box main body outer layer 151 formed of a rigid thermoplastic resin, and the box main body inner layer 161 formed of a synthetic resin foam body (refer to FIGS. 40 and 41).

Moreover, the cover 170A has a two-layer structure which is configured of the cover outer layer 171 formed of a rigid thermoplastic resin, and the cover inner layer 181 formed of a synthetic resin foam body (refer to FIGS. 42 to 45).

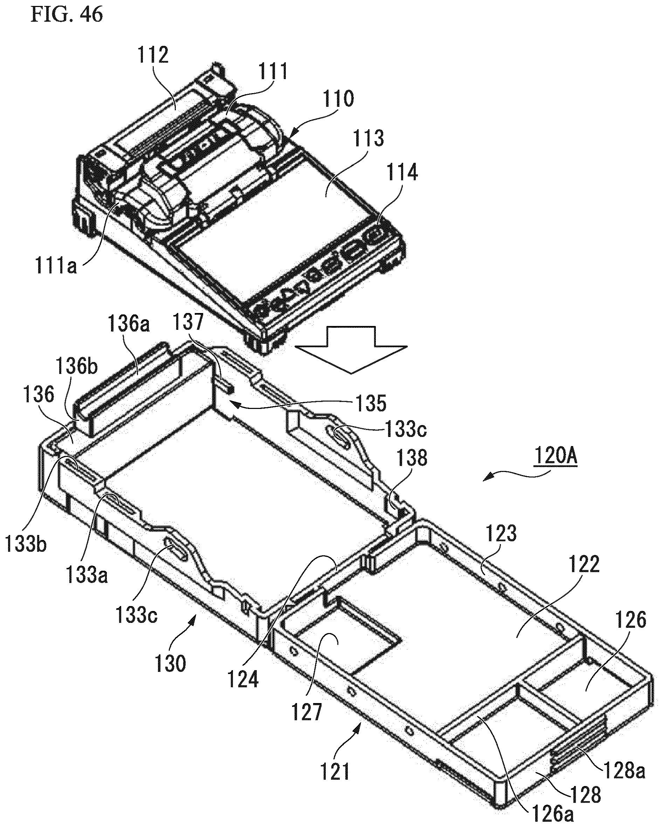

In addition, the working table 120A includes the fusion splicing machine installation portion 130 which accommodates the fusion splicing machine 110, and the working surface 122 on which the preparation work for the optical fiber is performed (refer to FIGS. 46 to 53B).

It is needless to say that the optical fiber fusion splice system according to the fourth embodiment provides effects similar to those of the second embodiment.

In addition, the working table 120A of the present embodiment includes recessed portions 126 and 127 on which articles or the like can be placed on the working surface 122.

Accordingly, the articles which are in use on the working surface 122 and other articles can be orderly arranged, and thus, the workability is improved.

The recessed portion 126 is partitioned by a partition 126a which is provided to extend from the working surface 122, and the recessed portion 127 is recessed to be lower than the working surface 122.

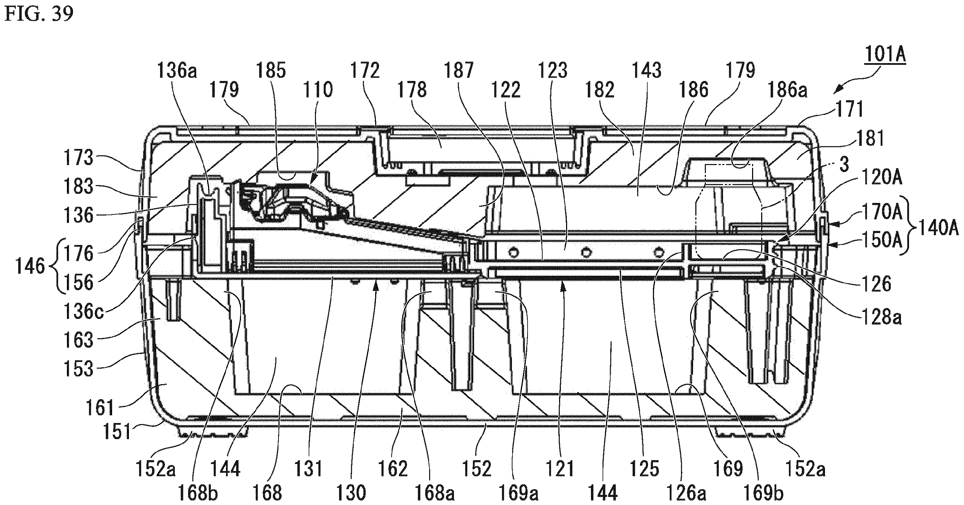

In addition, as shown in FIG. 39 or the like, high articles such as an alcohol container 3 can be accommodated between the recessed portion 126 on the working surface 122 and a recessed portion 186a provided in the cover 170A side.

The recessed portion 127 and the recessed portion 126 are provided at positions which are rotated 180° on a horizontal surface and are symmetrical to each other.

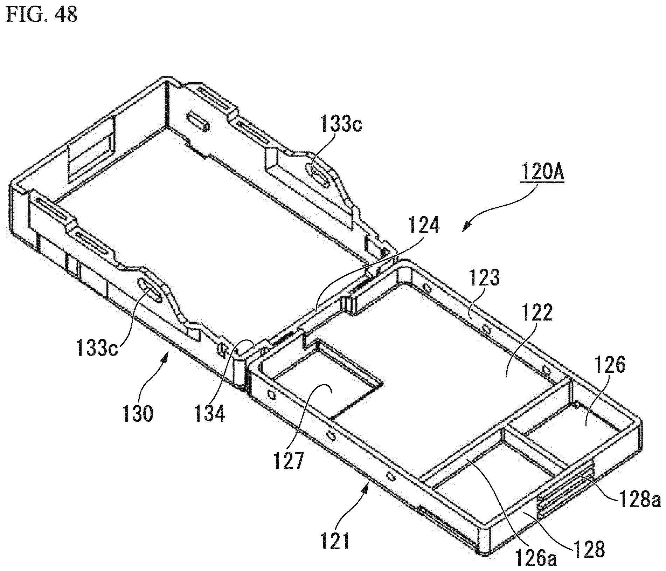

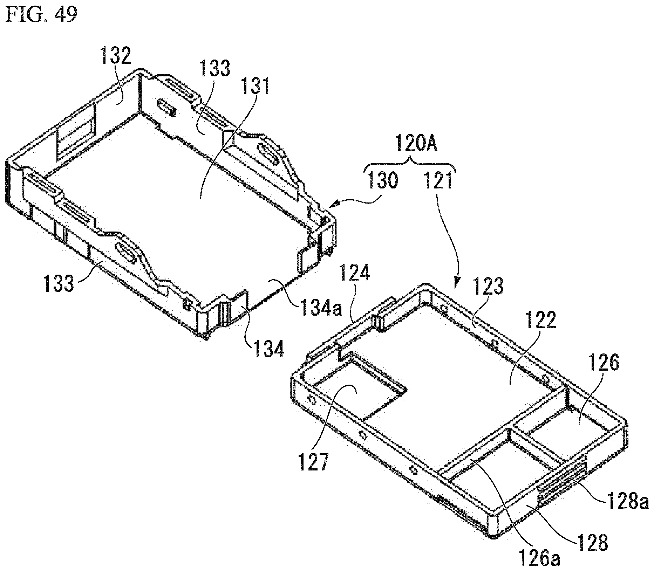

Accordingly, even when the work tray 121 is separated from the fusion splicing machine installation portion 130 (refer to FIGS. 48 and 49) and the end wall portion 128 faces the fusion splicing machine installation portion 130, the alcohol container 3 or the like can be accommodated between the recessed portion 127 on the working surface 122 and the recessed portion 186a of the cover 170A.

As described above, the present invention is described based on the preferred embodiments. However, the present invention is not limited to the above-described embodiments, and various modifications are possible within a scope which does not depart from the gist of the present invention.

For example, the box is not limited to the type in which the upper end of the side wall portion of the box main body and the lower end of the side wall portion of the cover are matched with each other. That is, a type in which the cover is horizontally inserted into the upper surface of the box main body, a type in which a two-sides cover is mounted to an opposite two sides of the box main body through respective shafts, or the like may be used.

The optical fiber which is fusion-spliced is not limited to the optical fiber core which is extracted from the optical fiber cable, and may be an optical fiber cord or the like.

As the optical fiber core, there are a core which is formed of silica based glass, and an optical fiber core in which a resin coating having one layer or two or more layers is provided around a bare optical fiber having cladding.

The falling prevention protrusion 23 or the side portion 33 of the working table 20 may be formed in a fence shape, or may be a shape in which pile-like structures are arranged in rows at appropriate intervals.

### DESCRIPTION OF THE REFERENCE SYMBOLS

1, 1A, 101, 101A... optical fiber fusion splice system, 2... optical fiber, 10, 110... fusion splicing machine, 11, 111... fusion splicing portion, 12, 112... reinforcing sleeve heating portion, 13, 113... indicator, 20, 20A, 120, 120A... working table, 22, 122... working surface, 23, 123... falling prevention protrusion, 30, 130... fusion splicing machine installation portion, 32a, 136a... optical fiber installation stand, 35, 135... fusion splicing machine restriction portion, 40, 40A, 140, 140A... storage box, 43, 143... first accessory storage portion, 44, 144... second accessory storage portion, 50, 50A, 150, 150A... box main body, 51, 151... box main body outer layer, 52, 62, 152, 162... bottom portion, 53, 63, 153, 163... side wall portion, 53a, 63a, 153a, 163a... front wall, 53b, 63b, 153b, 163b... rear wall, 53c, 63c, 153c, 163c... end wall, 61, 161... box main body inner layer, 65, 165... working table fitting portion, 66, 166...protrusion, 67, 167...recessed portion, 70, 70A, 170, 170A... cover, 71, 171... cover outer layer, 72, 82, 172, 182... top portion, 73, 83, 173, 183... side wall portion, 73a, 83a, 173a, 183a... front wall, 73b, 83b, 173b, 183b... rear wall, 73, 83c, 173c, 183c... end wall, 81, 181... cover inner layer

## Claims

1. An optical fiber fusion splice system (1, 1A, 101, 101A) comprising a working table (20, 20A, 120, 120A) and a storage box (40, 40A, 140, 140A) which stores the working table (20, 20A, 120, 120A), wherein the working table (20, 20A, 120, 120A) comprises a fusion splicing machine installation portion (30, 130) accommodating a fusion splicing machine (10, 110) to be stored in the storage box (40, 40A, 140, 140A) and a working surface (22, 122) on which preparation work for an optical fiber (2) is configured to be performed,
the fusion splicing machine installation portion (30, 130) comprises a fusion splicing machine restriction portion (35, 135) being configured to restrict the fusion splicing machine (10, 110) without the fusion splicing machine (10, 110) moving in a horizontal direction with respect to the working table (20, 20A, 120, 120A),
the working surface (22, 122) comprises a protrusion (66, 166) provided on an outer circumference of the working surface (22, 122), the protrusion (66, 166) being configured to prevent a tool used in the preparation work from falling from the working surface (22, 122),
the storage box (40, 40A, 140, 140A) comprises a box main body (50, 50A, 150, 150A) and a cover (70, 70A, 170, 170A) which covers an upper portion of the box main body (50, 50A, 150, 150A),
the box main body (50, 50A, 150, 150A) has a two-layer structure which is configured of a box main body outer layer (51, 151) formed of a rigid thermoplastic resin and a box main body inner layer (61, 161) of which at least a portion is formed of a synthetic resin foam body,
the box main body outer layer (51, 151) includes a bottom portion (52, 62, 152, 162) and a side wall portion (53, 63, 153, 163) which is erected around the bottom portion (52, 62, 152, 162),
the box main body inner layer (61, 161) comprises a working table fitting portion (65, 165) capable of being fitted to the working table (20, 20A, 120, 120A) so that the box main body outer layer (51, 151) and the working table (20, 20A, 120, 120A) have no contact each other,
the working table fitting portion (65, 165) comprises protrusions (66, 166) contacting the working table (20, 20A, 120, 120A) and recessed portions (67, 167) having no contact with the working table (20, 20A, 120, 120A),
the cover (70, 70A, 170, 170A) has a two-layer structure which is configured of a cover outer layer (71, 171) formed of a rigid thermoplastic resin, and a cover inner layer (81, 181) formed of a synthetic resin foam body, and
the cover outer layer (71, 171) has no contact with the working table (20, 20A, 120, 120A).

2. The optical fiber fusion splice system (1, 1 A, 101, 101 A) according to claim 1, wherein
the synthetic resin foam body forming the box main body inner layer (61, 161) and the cover inner layer (81, 181), is foamed polystyrene.

3. The optical fiber fusion splice system (1, 1 A, 101, 101A) according to claim 1 or 2, wherein
the protrusions (66, 166) are provided in three or more places around the working table (20, 20A, 120, 120A) or in two places which are opposite to each other around the working table (20, 20A, 120, 120A) and are arranged between the working table (20, 20A, 120, 120A) and the side wall portion (53, 63, 153, 163) of the box main body outer layer (51, 151).

4. The optical fiber fusion splice system (1, 1A) according to any one of claims 1 to 3, further comprising:
the fusion splicing machine (10), wherein
the fusion splicing machine (10) comprises an indicator (13) which is movable from a side surface of the fusion splicing machine (10) toward the outside, and
the box main body (50, 50A) is formed so as not to contact the indicator (13) when the indicator (13) moves and further comprises a notch portion (54) notched from an upper end of the box main body (50, 50A) toward a lower end.

5. The optical fiber fusion splice system (1, 1 A) according to claim 4, wherein
the cover (70, 70A) further comprises a protrusion portion (74) capable of being fitted to the notch portion (54).

6. The optical fiber fusion splice system (101, 101A) according to any one of claims 1 to 3, further comprising:
the fusion splicing machine (110), wherein
the fusion splicing machine (110) comprises an indicator (113) fixed onto an upper surface of the fusion splicing machine (110).

7. The optical fiber fusion splice system (1, 1 A, 101, 101A) according to any one of claims 1 to 6, wherein
the working table (20, 20A, 120, 120A) further comprises a fixation hole (33a, 33b, 133a, 133b) into which an optical fiber transportation jig is configured to be inserted, the optical fiber transportation jig being used after fusion splice.

8. The optical fiber fusion splice system (1, 1 A, 101, 101A) according to any one of claims 1 to 7, wherein
the storage box (40, 40A, 140, 140A) further comprises a first accessory storage portion (43, 143) storing an article on the working surface (22, 122), and a second accessory storage portion (44, 144) storing an article below the fusion splicing machine installation portion (30, 130) or below the working surface (22, 122).

9. The optical fiber fusion splice system (1, 1 A, 101, 101A) according to claim 8, wherein
the cover (70, 70A, 170, 170A) further comprises a partition (87, 187) provided between the first accessory storage portion (43, 143) and the fusion splicing machine (10, 110).

10. The optical fiber fusion splice system (101, 101A) according to claim 8 or 9, wherein
the working table (120, 120A) further comprises a partition wall provided between the second accessory storage portion (144) and the fusion splicing machine (110).

11. The optical fiber fusion splice system (1, 1 A, 101, 101A) according to any one of claims 1 to 10, wherein
the bottom portion of the box main body (50, 50A, 150, 150A) and the cover (70, 70A, 170, 170A) have a waterproof property to prevent water from infiltrating into an inner portion of the storage box (40, 40A, 140, 140A).

## Patentansprüche

1. Glasfaserschmelzspleißsystem (1, 1A, 101, 101A), das einen Arbeitstisch (20, 20A, 120, 120A) und eine Verstaukiste (40, 40A, 140, 140A), die den Arbeitstisch (20, 20A, 120, 120A) verstaut, umfasst, wobei
der Arbeitstisch (20, 20A, 120, 120A) einen Schmelzspleißmaschine-Installationsteil (30, 130) umfasst, der eine in der Verstaukiste (40, 40A, 140, 140A) zu verstauende Schmelzspleißmaschine (10, 110) und eine Arbeitsoberfläche (22, 122), die für darauf durchzuführende Vorbereitungsarbeiten für eine Glasfaser (2) ausgelegt ist, beherbergt,
der Schmelzspleißmaschine-Installationsteil (30, 130) ein Schmelzspleißmaschine-Beschränkungsteil (35, 135) umfasst, der ausgelegt ist zum Beschränken der Schmelzspleißmaschine (10, 110), so dass sich die Schmelzspleißmaschine (10, 110) nicht in einer horizontalen Richtung relativ zum Arbeitstisch (20, 20A, 120, 120A) bewegt,
die Arbeitsoberfläche (22, 122) einen Vorsprung (66, 166) umfasst, der an einem Außenumfang der Arbeitsoberfläche (22, 122) vorgesehen ist, wobei der Vorsprung (66, 166) dafür ausgestaltet ist, zu verhindern, dass ein bei den Vorbereitungsarbeiten verwendetes Werkzeug von der Arbeitsoberfläche (22, 122) fällt,
die Verstaukiste (40, 40A, 140, 140A) einen Kistenhauptkörper (50, 50A, 150, 150A) und eine Abdeckung (70, 70A, 170, 170A), die einen Oberteil des Kistenhauptkörpers (50, 50A, 150, 150A) abdeckt, umfasst,
der Kistenhauptkörper (50, 50A, 150, 150A) eine Zweischichtstruktur umfasst, die aus einer Kistenhauptkörper-Außenschicht (51, 151), die aus einem starren Thermoplastharz gebildet ist, und einer Kistenhauptkörper-Innenschicht (61, 161), von der mindestens ein Teil aus einem synthetischen Harzschaumkörper gebildet ist, ausgestaltet ist,
die Kistenhauptkörper-Außenschicht (51, 151) einen Bodenteil (52, 62, 152, 162) und einen Seitenwandteil (53, 63, 153, 163), der um den Bodenteil (52, 62, 152, 162) herum errichtet ist, beinhaltet,
die Kistenhauptkörper-Innenschicht (61, 161) einen Arbeitstischeinbauteil (65, 165), der dazu geeignet ist, in den Arbeitstisch (20, 20A, 120, 120A) eingebaut zu werden, so dass die Kistenhauptkörper-Außenschicht (51, 151) und der Arbeitstisch (20, 20A, 120, 120A) einander nicht berühren, umfasst,
der Arbeitstischeinbauteil (65, 165) Vorsprünge (66, 166), die den Arbeitstisch (20, 20A, 120, 120A) berühren, und Einsenkteile (67, 167), die keine Berührung mit dem Arbeitstisch (20, 20A, 120, 120A) aufweisen, umfasst,
die Abdeckung (70, 70A, 170, 170A) eine Zweischichtstruktur aufweist, die aus einer Abdeckungsaußenschicht (71, 171), die aus einem starren Thermoplastharz gebildet ist, und einer Abdeckungsinnenschicht (81, 181), die aus einem synthetischen Harzschaumkörper gebildet ist, ausgestaltet ist, und
die Abdeckungsaußenschicht (71, 171) keine Berührung mit dem Arbeitstisch (20, 20A, 120, 120A) aufweist.

2. Glasfaserschmelzspleißsystem (1, 1A, 101, 101A) nach Anspruch 1, wobei
der synthetische Harzschaumkörper, der die Kistenhauptkörper-Innenschicht (61, 161) und die Abdeckungsinnenschicht (81, 181) bildet, aus aufgeschäumtem Polystyrol besteht.

3. Glasfaserschmelzspleißsystem (1, 1A, 101, 101A) nach Anspruch 1 oder 2, wobei
die Vorsprünge (66, 166) an drei oder mehr Stellen um den Arbeitstisch (20, 20A, 120, 120A) herum oder an zwei Stellen um den Arbeitstisch (20, 20A, 120, 120A) herum einander gegenüberliegend vorgesehen sind und die zwischen dem Arbeitstisch (20, 20A, 120, 120A) und dem Seitenwandteil (53, 63, 153, 163) der Kistenhauptkörper-Außenschicht (51, 151) angeordnet sind.

4. Glasfaserschmelzspleißsystem (1, 1A) nach einem der Ansprüche 1 bis 3, das ferner Folgendes umfasst:
die Schmelzspleißmaschine (10), wobei
die Schmelzspleißmaschine (10) einen Anzeiger (13) umfasst, der von einer Seitenoberfläche der Schmelzspleißmaschine (10) nach außen bewegbar ist, und der Kistenhauptkörper (50, 50A) derart ausgebildet ist, den Anzeiger (13) nicht zu berühren, wenn sich der Anzeiger (13) bewegt, und ferner einen Kerbenteil (54) umfasst, der von einem oberen Ende des Kistenhauptkörpers (50, 50A) zu einem unteren Ende hin eingekerbt ist.

5. Glasfaserschmelzspleißsystem (1, 1A) nach Anspruch 4, wobei die Abdeckung (70, 70A) ferner einen Vorsprungteil (74) umfasst, der dafür geeignet ist, in dem Kerbenteil (54) eingepasst zu werden.

6. Glasfaserschmelzspleißsystem (101, 101A) nach einem der Ansprüche 1 bis 3, das ferner Folgendes umfasst:
die Schmelzspleißmaschine (110), wobei
die Schmelzspleißmaschine (110) einen Anzeiger (113) umfasst, der an einer oberen Oberfläche der Schmelzspleißmaschine (110) befestigt ist.

7. Glasfaserschmelzspleißsystem (1, 1A, 101, 101A) nach einem der Ansprüche 1 bis 6, wobei
der Arbeitstisch (20, 20A, 120, 120A) ferner ein Befestigungsloch (33a, 33b, 133a, 133b) umfasst, das dafür ausgestaltet ist, dass eine Glasfasertransportapparatur in dieses eingesetzt werden kann, wobei die Glasfasertransportapparatur nach dem Schmelzspleißen verwendet wird.

8. Glasfaserschmelzspleißsystem (1, 1A, 101, 101A) nach einem der Ansprüche 1 bis 7, wobei
die Verstaukiste (40, 40A, 140, 140A) ferner einen ersten Zubehörverstauteil (43, 143), der einen Gegenstand auf der Arbeitsoberfläche (22, 122) verstaut, und einen zweiten Zubehörverstauteil (44, 144), der einen Gegenstand unter dem Schmelzspleißmaschine-Installationsteil (30, 130) oder unter der Arbeitsoberfläche (22, 122) verstaut, umfasst.

9. Glasfaserschmelzspleißsystem (1, 1A, 101, 101A) nach Anspruch 8, wobei
die Abdeckung (70, 70A, 170, 170A) ferner eine Unterteilung (87, 187) umfasst, die zwischen dem ersten Zubehörverstauteil (43, 143) und der Schmelzspleißmaschine (10, 110) vorgesehen ist.

10. Glasfaserschmelzspleißsystem (101, 101A) nach Anspruch 8 oder 9, wobei
der Arbeitstisch (120, 120A) ferner eine Unterteilungswand umfasst, die zwischen dem zweiten Zubehörverstauteil (144) und der Schmelzspleißmaschine (110) vorgesehen ist.

11. Glasfaserschmelzspleißsystem (1, 1A, 101, 101A) nach einem der Ansprüche 1 bis 10, wobei
der Bodenteil des Kistenhauptkörpers (50, 50A, 150, 150A) und die Abdeckung (70, 70A, 170, 170A) eine wasserdichte Eigenschaft aufweisen, um Wasser am Eindringen in einen Innenteil der Verstaukiste (40, 40A, 140, 140A) zu hindern.

## Revendications

1. Système d'épissage par fusion de fibre optique (1, 1A, 101, 101A) comprenant une table de travail (20, 20A, 120, 120A) et un boîtier de stockage (40, 40A, 140, 140A) qui stocke la table de travail (20, 20A, 120, 120A), dans lequel
la table de travail (20, 20A, 120, 120A) comprend une partie d'installation de machine d'épissage par fusion (30, 130) logeant une machine d'épissage par fusion (10, 110) devant être stockée dans le boîtier de stockage (40, 40A, 140, 140A) et une surface de travail (22, 122) sur laquelle un travail de préparation d'une fibre optique (2) est conçu pour être exécuté,
la partie d'installation de machine d'épissage par fusion (30, 130) comprend une partie de contrainte de machine d'épissage par fusion (35, 135) conçue pour contraindre la machine d'épissage par fusion (10, 110) sans que la machine d'épissage par fusion (10, 110) se déplace dans une direction horizontale par rapport à la table de travail (20, 20A, 120, 120A),
la surface de travail (22, 122) comprend une saillie (66, 166) prévue sur une circonférence externe de la surface de travail (22, 122), la saillie (66, 166) étant configurée pour empêcher qu'un outil utilisé dans le travail de préparation ne tombe de la surface de travail (22, 122),
le boîtier de stockage (40, 40A, 140, 140A) comprend un corps principal de boîtier (50, 50A, 150, 150A) et un couvercle (70, 70A, 170, 170A) qui couvre une partie supérieure du corps principal de boîtier (50, 50A, 150, 150A),
le corps principal de boîtier (50, 50A, 150, 150A) possède une structure à deux couches qui est constituée d'une couche externe de corps principal de boîtier (51, 151) formée d'une résine thermoplastique rigide et d'une couche interne de corps principal de boîtier (61, 161) dont au moins une partie est formée d'un corps de mousse en résine synthétique,
la couche externe de corps principal de boîtier (51, 151) inclut une partie inférieure (52, 62, 152, 162) et une partie de paroi latérale (53, 63, 153, 163) qui est dressée autour de la partie inférieure (52, 62, 152, 162),
la couche interne de corps principal de boîtier (61, 161) comprend une partie de fixation à la table de travail (65, 165) capable d'être fixée à la table de travail (20, 20A, 120, 120A) de telle sorte que la couche externe de corps principal de boîtier (51, 151) et la table de travail (20, 20A, 120, 120A) n'aient aucun contact l'une avec l'autre,
la partie de fixation de table de travail (65, 165) comprend des saillies (66, 166) en contact avec la table de travail (20, 20A, 120, 120A) et des parties évidées (67, 167) n'ayant aucun contact avec la table de travail (20, 20A, 120, 120A),
le couvercle (70, 70A, 170, 170A) a une structure à deux couches qui est constituée d'une couche externe de couvercle (71, 171) formée d'une résine thermoplastique rigide, et d'une couche interne de couvercle (81, 181) formée d'un corps de mousse en résine synthétique, et
la couche externe de couvercle (71, 171) n'a aucun contact avec la table de travail (20, 20A, 120, 120A).

2. Système d'épissage par fusion de fibre optique (1, 1A, 101, 101A) selon la revendication 1, dans lequel
le corps de mousse en résine synthétique formant la couche interne de corps principal de boîtier (61, 161) et la couche interne de couvercle (81, 181) est du polystyrène expansé.

3. Système d'épissage par fusion de fibre optique (1, 1A, 101, 101A) selon la revendication 1 ou 2, dans lequel
les saillies (66, 166) sont prévues à trois endroits ou plus autour de la table de travail (20, 20A, 120, 120A) ou à deux endroits qui sont opposés l'un par rapport à l'autre autour de la table de travail (20, 20A, 120, 120A) et sont agencées entre la table de travail (20, 20A, 120, 120A) et la partie de paroi latérale (53, 63, 153, 163) de la couche externe de corps principal de boîtier (51, 151).

4. Système d'épissage par fusion de fibre optique (1, 1A) selon l'une quelconque des revendications 1 à 3 comprenant en outre :
la machine d'épissage par fusion (10), dans lequel
la machine d'épissage par fusion (10) comprend un indicateur (13) qui est mobile d'une surface latérale de la machine d'épissage par fusion (10) vers l'extérieur, et
le corps principal de boîtier (50, 50A) est formé de sorte à ne pas être en contact avec l'indicateur (13) lorsque l'indicateur (13) se déplace et comprend en outre une partie formant encoche (54) entaillée d'une extrémité supérieure du corps principal de boîtier (50, 50A) vers une extrémité inférieure.

5. Système d'épissage par fusion de fibre optique (1, 1A) selon la revendication 4, dans lequel
le couvercle (70, 70A) comprend en outre une partie formant saillie (74) capable d'être fixée à la partie formant encoche (54).

6. Système d'épissage par fusion de fibre optique (101, 101A) selon l'une quelconque des revendications 1 à 3, comprenant en outre :
la machine d'épissage par fusion (110), dans lequel
la machine d'épissage par fusion (110) comprend un indicateur (113) fixé sur une surface supérieure de la machine d'épissage par fusion (110).

7. Système d'épissage par fusion de fibre optique (1, 1A, 101, 101A) selon l'une quelconque des revendications 1 à 6, dans lequel
la table de travail (20, 20A, 120, 120A) comprend en outre un trou de fixation (33a, 33b, 133a, 133b) dans lequel un support de transport de fibre optique est conçu pour être inséré, le support de transport de fibre optique étant utilisé après épissage par fusion.

8. Système d'épissage par fusion de fibre optique (1, 1A, 101, 101A) selon l'une quelconque des revendications 1 à 7, dans lequel
le boîtier de stockage (40, 40A, 140, 140A) comprend en outre une première partie de stockage d'accessoire (43, 143) stockant un article sur la surface de travail (22, 122), et une seconde partie de stockage d'accessoire (44, 144) stockant un article en dessous de la partie d'installation de machine d'épissage (30, 130) ou en dessous de la surface de travail (22, 122).

9. Système d'épissage par fusion de fibre optique (1, 1A, 101, 101A) selon la revendication 8, dans lequel
le couvercle (70, 70A, 170, 170A) comprend en outre une cloison (87, 187) prévue entre la première partie de stockage d'accessoire (43, 143) et la machine d'épissage par fusion (10, 110).

10. Système d'épissage par fusion de fibre optique (101, 10A) selon la revendication 8 ou 9, dans lequel
la table de travail (120, 120A) comprend en outre une paroi de cloison prévue entre la seconde partie de stockage d'accessoire (144) et la machine d'épissage par fusion (110).

11. Système d'épissage par fusion de fibre optique (1, 1A, 101, 101A) selon l'une quelconque des revendications 1 à 10, dans lequel
la partie inférieure du corps principal de boîtier (50, 50A, 150, 150A) et le couvercle (70, 70A, 170, 170A) ont une propriété d'étanchéité à l'eau pour empêcher l'eau de s'infiltrer dans une partie interne du boîtier de stockage (40, 40A, 140, 140A).
